(19) Europäisches Patentamt / European Patent Office / Office européen des brevets

(11) **EP 4 322 071 B1**

(12) **EUROPEAN PATENT SPECIFICATION**

(45) Date of publication and mention of the grant of the patent:
**10.07.2024 Bulletin 2024/28**

(21) Application number: **22189898.4**

(22) Date of filing: **11.08.2022**

(51) International Patent Classification (IPC):
**G06N 10/40** *(2022.01)* **G06N 10/20** *(2022.01)*

(52) Cooperative Patent Classification (CPC):
**G06N 10/40; G06N 10/20**

(54) **TRANSVERSE STATE-DEPENDENT FORCE FOR TRAPPED ION ENTANGLEMENT**

TRANSVERSALE ZUSTANDSABHÄNGIGE KRAFT FÜR DIE VERSCHRÄNKUNG GEFANGENER IONEN

FORCE TRANSVERSALE DÉPENDANT DE L'ÉTAT POUR L'ENCHEVÊTREMENT DES IONS PIÉGÉS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**14.02.2024 Bulletin 2024/07**

(73) Proprietor: **Alpine Quantum Technologies GmbH 6020 Innsbruck (AT)**

(72) Inventors:
• **ERHARD, Alexander
  6020 Innsbruck (AT)**
• **FELDKER, Thomas
  6020 Innsbruck (AT)**
• **JACOB, Georg
  6020 Innsbruck (AT)**

(74) Representative: **Grünecker Patent- und Rechtsanwälte PartG mbB Leopoldstraße 4 80802 München (DE)**

(56) References cited:
**US-A1- 2020 373 917     US-A1- 2021 304 051**

• **ADAM D WEST ET AL: "Tunable transverse spin-motion coupling for quantum information processing", ARXIV.ORG, CORNELL UNIVERSITY LIBRARY, 201 OLIN LIBRARY CORNELL UNIVERSITY ITHACA, NY 14853, 20 July 2020 (2020-07-20), XP081999055, DOI: 10.1088/2058-9565/ABCB5D**

**Description**

TECHNICAL FIELD

The invention relate to the field of entangling trapped ions.

BACKGROUND

In many technical applications (e.g. quantum computing, quantum simulations, atomic and molecular experiments, spectroscopy, atomic clocks, metrology, etc.), individual ions are trapped and manipulated using laser beams. For example, in the field of quantum computing, trapped ions are used to represent qubits, and quantum computations are performed by irradiating the ions with appropriate laser beams. An important aspect in such applications, in particular for performing quantum computations with trapped ions, is the generation of entangled states of two or more ions that are initially in an unentangled state.

A device for trapping ions, also referred to as ion trap, typically includes a plurality of electrodes that generate the electromagnetic fields for confining the ions to a small region of a vacuum chamber. However, the components of such a trapping setup limit the optical access and may make it difficult to address (only) specific ions of an ion/qubit register and/or to address ions from particular directions, in particular in the axial direction of a linear ion string.

Present approaches of entangling m (two or more) ions/qubits in a register of n trapped ions typically require high-NA (numerical aperture) optical access form at least two different directions at the same time in order to reach a sufficiently small focus to only illuminate the respective m ions. For instance, current implementations of light-shift (LS) gates are based on a standing wave generated by two laser beams with specific properties from different directions. This may make the technical implementation challenging, reduce the fidelity of the entangling operation, increase the cost of the setup, and/or limit the motional modes that can be used.

*Cited Literature*

[1] D. Leibfried et al.: "Experimental demonstration of a robust, high-fidelity geometric two ion-qubit phase gate", Nature 422, 412 to 415, (2003);

[2] P.J. Lee et al.: "Phase control of trapped ion quantum gates", J. Opt. B: Quantum Semiclass. Opt. 7 (2005) S371-S383, arXiv:quant-ph/0505203;

[3] L. Aolita et al.: "High-fidelity ion-trap quantum computing with hyperfine clock states", Phys. Rev. A 76, 040303(R), October19, 2007, arXiv:0707.3916.

[4] B. Sawyer et al.: "A Wavelength-Insensitive, Multispecies Entangling Gate for Group-2 Atomic Ions", Phys. Rev. A 103, 022427 (2021), arXiv:2010.04526.

[5] Adam D West et al: "Tunable transverse spin-motion coupling for quantum information processing", arxiv.org, Cornell University library, July 20, 2020, relates to laser-controlled entanglement between atomic qubits to mediate conditional quantum logic between spatially separated qubits in quantum computers. More specifically, the spin-motion entanglement is produced by applying a spatially varying interaction with an electromagnetic field that gives a spin-dependent force. A single laser beam with a transverse gradient is used to produce spin-motion entanglement perpendicular to the laser propagation direction.

SUMMARY

It may be desirable to provide a simple and versatile technique for entangling trapped ions.

The invention is defined by the independent claims. Some of the advantageous embodiments are subject matter to the dependent claims.

Embodiments and examples not falling under the scope of the independent claims are for illustrational purposes only.

Details of one or more embodiments are set forth in the accompanying drawings and the description below. Other features, objects, and advantages will be apparent from the description, drawings, and claims.

BRIEF DESCRIPTION OF THE DRAWINGS

In the following embodiments of the invention are described in more detail with reference to the attached figures and drawings, in which:

Fig. 1     is a schematic drawing illustrating different energy levels due to different excitation of a motional mode;
Fig. 2     is a flowchart illustrating exemplary steps for entangling trapped ions;
Fig. 3     block diagram illustrating an exemplary setup for entangling trapped ions;
Fig. 4     is a block diagram illustrating an exemplary functional structure of the controller of Fig. 3.
Fig. 5     is a schematic diagram illustrating the addressing of two ions with a single objective;
Fig. 6     provides a scheme of an exemplary optical path of the laser beams;
Fig. 7     illustrates the radial intensity profile of a Gaussian laser beam and the positioning of the addressed ion at the position of a maximum intensity gradient;
Fig. 8a    illustrates a laser beam comprising two beam components with same, but displaced, beam shapes;
Fig. 8b    illustrates a laser beam comprising two beam components with different beam shapes;
Fig. 8c    illustrates a laser beam comprising two beam components with different beam shapes and orthogonal linear polarization;
Fig. 9a    illustrates the radial dependency of the amplitudes of the electric fields of (i) the laser beam component and (ii) the laser beam of Fig. 8b;
Fig. 9b    illustrates the radial dependency of (i) the intensities of the laser beam components and the laser beam of Fig. 8b, and (ii) the gradient of said laser beam intensity;
Fig. 10    illustrates a first example of energy levels and laser frequency for implementing a SDF on an ion;
Fig. 11    illustrates a second example of energy levels and laser frequency for implementing a SDF on an ion;
Fig. 12    illustrates conditional excitation of the axial center of mass mode of an ion string using SDFs; Figs. 12a) to 12d) are xy-cuts (at z=0) that respectively illustrate the SDFs and their effect of two laser beams on the $|00\rangle$, the $|01\rangle$, the $|10\rangle$, and the $|11\rangle$ state of the two addressed qubits, and Fig.12e) illustrates the geometric situation and the used coordinate system in a three-dimensional view;
Fig. 13    illustrates an exemplary beam geometry (in particular, the position of the beam axes with respect to the addressed ions) for entangling two ions using an axial motional mode and e.g. Gaussian beams; Figs 13a) to c) show different two-dimensional cuts, and Fig.13d) illustrates the geometric situation and the used coordinate system in a three-dimensional view;
Fig. 14    illustrates an exemplary beam geometry (in particular, the position of the beam axes with respect to the addressed ions) for entangling two ions using a radial motional mode and e.g. Gaussian beams; Figs 14a) to c) show different two-dimensional cuts, and Fig.14d) illustrates the geometric situation and the used coordinate system in a three-dimensional view;
Fig. 15    illustrates excitation of the axial center-of-mass mode of a linear ion crystal, where Figs 15a) to c) show different two-dimensional cuts of the same situation;
Fig. 16    illustrates excitation of the axial stretch mode of a linear ion crystal, where Figs 16a) to c) show different two-dimensional cuts of the same situation; and
Fig. 17    illustrates excitation of an in-plane mode in a 2D ion crystal, where Figs 17a) to c) show different two-dimensional cuts, and Fig.17d) illustrates the geometric situation and the used coordinate system in a three-dimensional view.

It is to be expressly understood, however, that the drawings are for the purpose of illustration and description only and are not intended as a definition of the limits of the disclosed subject matter. Furthermore, it is noted that identical reference signs refer to identical or at least functionally equivalent features.

DETAILED DESCRIPTION

In the following description, reference is made to the accompanying figures, which form part of the disclosure. The following detailed description, therefore, is not to be taken in a limiting sense, and the scope of the present invention is defined by the appended claims.
For purposes of the description hereinafter, the terms "end," "upper," "lower," "right," "left," "vertical," "horizontal," "top," "bottom," "lateral," "longitudinal," and derivatives thereof shall relate to the disclosed subject matter as it is oriented in the drawing figures. However, it is to be understood that the disclosed subject matter may assume various alternative variations and step sequences, except where expressly specified to the contrary. It is also to be understood that the specific devices and processes illustrated in the attached drawings, and described in the following specification, are exemplary. Hence, specific dimensions and other physical characteristics are not to be considered as limiting unless otherwise indicated.

No aspect, component, element, structure, act, step, function, instruction, and/or the like used herein should be construed as critical or essential unless explicitly described as such. Also, as used herein, the articles "a" and "an" are intended to include one or more items and may be used interchangeably with "one or more" and "at least one." Furthermore, as used herein, the term "set" is intended to include one or more items (e.g., related items, unrelated items, a combination of related and unrelated items, and/or the like) and may be used interchangeably with "one or more" or "at least one." Where only one item is intended, the term "one" or similar language is used. Also, as used herein, the terms "has," "have," "having," or the like are intended to be open-ended terms. Further, the phrase "based on" is intended to mean "based at least partially on" unless explicitly stated otherwise.

### Quantum Computing

In the following, several concepts and terms related to the field of quantum computing are briefly introduced. However, although the present invention may have many applications in the field of quantum computing and is here frequently explained in this context, it is noted that the present invention is not limited thereto as it relates to the more general field of entangling trapped ions, which has applications in other fields as well.

### Single-qubit States

In quantum computing, quantum bits or qubits represent the basic unit of quantum information. Thus, the qubit is the quantum version of the binary bit of a classical computer. However, while a bit can only assume two values, usually referred to as "0" and "1", a qubit corresponds to the state of a two-state quantum-mechanical system. Thus, the state $|\psi\rangle$ of a qubit can be described as a linear combination $|\psi\rangle = \alpha|0\rangle + \beta|1\rangle$, where $\alpha$ and $\beta$ are complex numbers constrained by the normalization condition $|\alpha|^2 + |\beta|^2 = 1$, and $|0\rangle$ and $|1\rangle$ denote the two states of the two-state quantum-mechanical system (since a two-state quantum system is mathematically equivalent to a spin-1/2 system, the two basis states are often also denoted as $|\downarrow\rangle$ and $|\uparrow\rangle$). Thus, a qubit is not limited to two values as the classical bit, but can also assume complex superposition of its $|0\rangle$ and $|1\rangle$ state. Since the global phase of a quantum state has no observational consequences, one of the numbers $\alpha$ and $\beta$ can be chosen to be real. In consequence, the state of a single qubit may be described by two real parameters, a relative phase $\varphi$ and an angle $\theta$, according to $\alpha = \cos(\theta/2)$ and $\beta = e^{-i\varphi}\sin(\theta/2)$, where $i = \sqrt{-1}$ denotes the imaginary unit. This circumstance is also frequently visualized by using a Bloch sphere, where any point on the Bloch sphere corresponds to a possible value of the qubit (and e.g. the North and the South Pole correspond to the $|0\rangle$ and $|1\rangle$ state, respectively).

### Multiple-qubit States and Entanglement

In general, the state $|\psi_{12}\rangle$ of two qubits may be written as

$$|\psi_{12}\rangle = \sum_{i,j=1,2} c_{ij} |\psi_{1,i}\rangle \otimes |\psi_{2,j}\rangle \equiv \sum_{i,j=1,2} c_{ij} |\psi_{1,i}\psi_{2,j}\rangle,$$

where the $c_{ij}$ are complex numbers, $\{|\psi_{1,i}\rangle\} = \{|0\rangle_1, |1\rangle_1\}$ is a basis of the first qubit state, and $\{|\psi_{2,j}\rangle\} = \{|0\rangle_2, |1\rangle_2\}$ is a basis of the second qubit state. The $|\psi_{1,i}\psi_{2,j}\rangle$ are the basis states of the product space $|\psi_{1,i}\psi_{2,j}\rangle$ corresponding to the basis states $|\psi_{1,i}\rangle$ and $|\psi_{2,j}\rangle$. To be specific, we use the notation $|00\rangle = |0\rangle_1 \otimes |0\rangle_2$, $|01\rangle = |0\rangle \otimes |1\rangle_2$, $|10\rangle = |1\rangle_1 \otimes |0\rangle_2$, $|11\rangle = |1\rangle_1 \otimes |1\rangle_2$ for the basis states of a two-qubit system.

In general, for a system of n qubits, there are $2^n$ complex numbers $c_{i_1 i_2 \ldots i_n}$. As for the single qubit, the $2^n$ complex degrees of freedom (corresponding to $2^{n+1}$ real parameters) are reduced by the normalization condition $\Sigma_{i,j} |c_{ij}|^2 = 1$ and by the circumstance that the global phase of the state $|\psi_{12}\rangle$ has no observational consequences. Thus, $2^{n+1} - 2$ real parameters are necessary to completely describe a general/arbitrary n qubit state.

The state $|\psi_{12}\rangle$ is a separable or product state if it can be written as $|\psi_{12}\rangle = |\psi_1\rangle \otimes |\psi_2\rangle$. More specifically, expressing the individual qubit states as $|\psi_1\rangle = \alpha_1|0\rangle_1 + \beta_1|1\rangle_1$ and $|\psi_2\rangle = \alpha_2|0\rangle_2 + \beta_2|1\rangle_2$, the above $c_{ij}$ are given as $c_{ij} = \alpha_i \cdot \beta_j$. However, n individual qubit states have 2n real degrees of freedom, whereas an n-qubit state has $2^{n+1} - 2$ real degrees of freedom. This implies that the coefficients $c_{ij}$ of a product state are not completely independent. For instance, the coefficients of a product state satisfy $c_{12}c_{21} = c_{11}c_{22}$.

An entangled state, on the other hand, is a state of two or more qubits that cannot be factored into a product of individual qubit states. In the present disclosure, entanglement refers to such a state. However, an entangled state is not necessarily a maximally entangled state, such as the Bell state

$$|\psi_{12}\rangle = (|0\rangle_1|0\rangle_2 + |1\rangle_1|1\rangle_2)/\sqrt{2} \equiv (|00\rangle + |11\rangle)/\sqrt{2}$$ . Correspondingly, the quantum gate implementations/method presented here may be used to generate entangled state that are not maximally entangled states.

### Quantum Gates

The term quantum logic gate, or short *"quantum gate"* refers to the quantum computational analogue to the logic gates in classical computation Quantum gates are thus the building blocks of quantum circuits. An arbitrary quantum algorithm corresponds to a unitary operation on the state vector of the qubits. Therefore, while classical gates implement Boolean functions on bits, quantum gates implement unitary, and in particular also reversible, operations on one or more qubits. Thus, the operation performed by a quantum gate on n qubits can be described by a $2^n \times 2^n$ unitary matrices acting on the state vector of the n qubits. It is noted that the state vector of n qubits is given by $2^n$ complex numbers, and not by just 2n complex numbers.

In general, *single-qubit operations,* performed by single-qubit gates, only change the state of a single/one qubit and leave the state(s) of other qubit(s) unchanged. More specifically, a single qubit operation performs a unitary operation on the state of a single qubit is independent of the current state of other qubits than said single qubit. A single qubit operation thus results in a complex rotation of the qubit state, thereby changing the above-mentioned $\alpha$ and/or $\beta$ of the respective qubit, and may be visualized as a rotation around an axis of the Bloch sphere of said single qubit.

When represented by internal states of an ion, the implementation of a single qubit operation may result in a wave function rotation of the qubit states of said ion. In particular, the motional state of the ion may be left (essentially, e.g. up to errors/imperfection of the implementation) unchanged. However, the effect of the implementation of a single qubit operation on internal states of the ion other than the two qubit states may be less important, since the wave function of the ion, on which the single qubit operation is performed, should usually have no overlap with said other states (here also referred to as non-qubit states). In general, to perform such rotation on a qubit, an electromagnetic field (e.g. with a laser beam on a trapped ion) having a suitable frequency may be applied for an appropriate time duration.

Examples for single qubit gates are the Pauli gates (X, Y, Z), which correspond to the operation of the three Pauli matrices on the qubit state and, thus, perform rotations around the x-, y-, and z-axes of the Bloch sphere by $\pi$ radians, respectively. It is noted that the Pauli-X gate is also referred to as the NOT gate. A further example is the phase shift gate $$P(\varphi) = \begin{bmatrix} 1 & 0 \\ 0 & e^{i\varphi} \end{bmatrix}$$ , which maps the basis states according to $|0\rangle \mapsto |0\rangle$ and $|1\rangle \mapsto e^{i\varphi}|1\rangle$.

Single-qubit operations on qubit states can be performed by applying appropriate radiation fields e.g. by means of laser beams/pulses. For example, a resonant microwave field can directly couple the qubit levels through a magnetic dipole interaction, resulting in coherent Rabi oscillations between the qubit states. Alternatively or in addition, optically stimulated transitions can be employed, using two optical sources that coherently couple the qubit states through excited electronic states

*Two-qubit operations,* performed by two-qubit gates, couple the wave functions of two qubits conditionally. This may lead to so-called entanglement, which is the underlying reason that $2^n$ complex numbers are generally required to fully specify the state of n qubits. An example for two-qubit gates are controlled gates, which act on the state of two or more qubits. For instance, the controlled-NOT (CNOT) gate acts on two qubits by (i) leaving one of the two qubits, the so-called control qubit, always unchanged, and (ii) performing the NOT operation on the other qubit if the control bit is in the $|1\rangle$ state. That is, the CNOT operation can be described by the matrix

$$\mathrm{CNOT} = \begin{bmatrix} 1 & 0 & 0 & 0 \\ 0 & 1 & 0 & 0 \\ 0 & 0 & 0 & 1 \\ 0 & 0 & 1 & 0 \end{bmatrix},$$

when the state of two qubits is expressed in the basis $|00\rangle$, $|01\rangle$, $|10\rangle$, $|11\rangle$ (in this order, $|01\rangle$ means that the first qubit is in the $|0\rangle$ state and the second qubit is in the $|1\rangle$ state), and the first bit is assumed to be the control qubit.

While single-qubit gates are usually relatively simple to perform (i.e. to physically implement, in particular on trapped ions), the CNOT and other two or more qubit gates are typically more demanding and usually also slow as compared to single-qubit gates. Like single-qubit gates, quantum gates that act on more than one qubit are usually also implemented on ion qubits by interactions of the ions with laser beams as further explained below.

In general, there also operations that include more than two qubits. However, it can be shown that there a sets of *universal quantum gates* that can approximate any unitary matrix, and thus any algorithm, arbitrarily well. More specifically, the unitary matrix can be approximated as a series (i.e. as a product of matrices) of operations performed by gates of the universal set. The accuracy of the approximation may in general depend on the length of the series. In particular, any quantum logic operation on an arbitrary number of qubits can be decomposed into single- and two-qubit operations. For instance, a widely used universal set of quantum gates for two qubits consists of the rotation operators $R_X(\theta)$ = exp(-$iX\theta$/2), $R_Y(\theta)$ = exp(-$iY\theta$/2), $R_Z(\theta)$ = exp(-$iZ\theta$/2) (X, Y, Z being the Pauli gates/matrices), the phase shift gate $P(\varphi)$, and the CNOT gate. Such small sets of universal quantum gates form the basis for building a quantum computer. In general, the physical implementation of (entangling) two or more qubit gates is a more challenging task than the implementation of single-qubit gates.

### Trapped Ions as Qubits

In general, any two-state quantum-mechanical system or any quantum-mechanical system with more than two states may be used to model (in other words, chosen to physically represent) a qubit. This means in particular that said quantum system is used to store the quantum information (i.e. the quantum state) of the qubit. If a quantum system has more than two states, two of these states may be selected and used to represent the qubit. In particular, a particular degree of freedom of the system (such as the spin of an electron) may be used to the represent the qubit. Usually, two reliably distinguishable quantum states and/or two states with different energies (or, in other words, different energy levels) are used.

For instance, the spin of an electron may be used to represent a qubit, e.g. by designating the spin-up and spin-down state (with respect to a given/selected direction) to represent the $|0\rangle$ and $|1\rangle$ state, respectively. Other examples include nuclear spin states, atomic or nuclear states, nuclear magnetic resonance states, and quantum dots or the like.

In the present disclosure, two internal states of a trapped ion (i.e. atom, particle or molecule with a net electrical charge) are usually considered to represent or model a qubit. Here, the term *"trapped ion"* refers to an ion that is confined to a small region in space, for instance in a vacuum chamber usually by means of electromagnetic fields. It is further noted that, when it is referred to trapped ions, (all) these trapped ions may be trapped by/with the same ion trap.

For instance, the ground state of a trapped ion (in general, the state with the lowest energy) may be chosen to represent the $|0\rangle$ state, and an excited state of the trapped ion may be chosen to represent the $|1\rangle$ state of a qubit. However, in general both the $|0\rangle$ and the $|1\rangle$ state may be excites states, i.e. each may be a state other than the ground state. Usually, an excited state with a long life time, a so-called metastable state, is selected for the $|0\rangle$ and/or the $|1\rangle$ state. When a qubit is represented by two internal states of a trapped ion, quantum logic operations can be performed through laser-ion interactions as further explained below.

It is further noted that the term *"internal state"* refers to a degree of freedom other than the motional degrees of freedom of the ion. The motional degrees of freedom are related to the position and momentum of the ion(s), e.g. of the center of mass of the ion, and may be given in terms of normal mode of (all) the trapped ions, as further explained below. Motional degrees of freedom of *individual* ion components, such as the orbital angular momentum of a (valence) electron, may however be considered to represent internal degrees of freedom. Furthermore, the spin state of electrons and other constituents of the ions are internal states. Thus, the qubit states may be two different stable electronic quantum states of an ion (in particular, e.g. Hyperfine-, Zeeman-ground state qubits, optical transition qubits, etc.).

Furthermore, it is noted that in the following the term *"qubit state"* refers to those internal states of a trapped ion selected to represent the respective qubit. Internal states of the ion that are not used to store qubit are referred to as *"non-qubit states"*. In other words, an internal state is either a qubit state or a non-qubit state. It is further noted that, depending on the context, the term *"qubit state"* may also refer to the state of the qubit, which in general is may be a superposition of the two qubit (basis) states.

It is noted that, in the present disclosure, the qubit states of an ion are also referred to as $|\downarrow\rangle$ and $|\uparrow\rangle$ state. This is done merely in view of the well-known example of a two-state quantum system, the quantum description of the spin of a spin-1/2 particle such as an electron. However, the present invention is not limited to the case that the qubits are represented by spin-1/2 systems. As explained above, the internal states $|\downarrow\rangle$ and $|\uparrow\rangle$ may be any two different internal states of a (same) trapped ion. The energy levels of two different internal states of an ion may be made different and/or made more different by applying an external electric and/or magnetic field.

For instance to implement a quantum computer with a plurality of qubits, a plurality of ions may be trapped with the same ion trap, and each trapped ion may be used to represent one qubit of the plurality of qubits. In general, the ions may be identical (i.e. of the same type, not the same in the sense that there is just one ion) and the same/corresponding states of each ion may be used to represent a qubit. For instance, Alkaline earth ions (i.e. Beryllium (Be), Magnesium (Mg), Calcium (Ca), Strontium (Sr), Barium (Ba), and Radium (Ra)) and/or Ytterbium (Yb) ions may be trapped and used to represent the qubits. The qubit states of the trapped ions may then be controlled, manipulated, and/or read out using radiation from one or more laser beams as explained in more detail below.

### Ion Traps

The term *"ion trap"* refers to any device employable to trap ions, i.e. to spatially confine ions to a particular (small) region. This region may be inside the ion trap, but as in the case of 2D traps is not necessarily the case. A few non-limiting examples of ion traps are presented below. However, it is noted that the present invention is not limited to any particular method/device for trapping the ions.

Usually, ion traps use electric and/or magnetic fields to trap ions. For instance, an ion trap may be a Penning trap; a Paul trap; a three dimensional, 3D, ion trap; and/or a linear 3D trap. In this disclosure, the term ion trap refers to an assembly with a plurality of electrodes which, when driven, generate an electric field that limits (traps) the freedom of movement of ions so that they may not escape a particular (preferably small) region in the vicinity of those electrodes. It is noted that the actual ion trap device/system may include further mechanical and electrical components such as fixing means, electrical contacts, housing, power source, control circuitry, means to cool ions or the like.

Here, the term *"3D trap"* refers to all traps, which are not surface traps. Surface traps are traps where all electrodes are located in a same plane. In particular, a 3D trap may be a Penning or a Paul trap. Usually, 3D ion traps have a rotational symmetry, e.g., a discrete cylindrical symmetry or a continuous cylindrical symmetry.

Without loss of generality, the symmetry axis of such a cylindrical symmetry may be assumed to be parallel to the z-axis of a Cartesian coordinate system in which the axes are represented by three mutually orthogonal unit vectors $\hat{e}_x$, $\hat{e}_y$, and $\hat{e}_z$. In this context, the symmetry axis is also referred to as the *"axial direction"*, and

$$\hat{r}(x,y) = (x\hat{e}_x + y\hat{e}_y)/\sqrt{x^2 + y^2}$$

as the *"radial direction"* (at the point $(x, y, 0) = x\hat{e}_x + y\hat{e}_y$). It is further noted that the symmetry axis may also be the axis along which multiple trapped ions typically align, as further explained below. Thus, the axial and radial axis of the ion trap may correspond (e.g. be identical to) to the oscillation direction of the axial and radial motional modes of the trapped ions, respectively.

A *Penning trap* refers to a trap that uses static electric and static magnetic fields to trap the ions. Usually, in a Penning trap solely static electric fields are used. In other words, usually no oscillating and/or alternating fields are used. For instance, to confine charged particles radially, a static magnetic field $\hat{B} = B_z\hat{e}_z$ in the axial direction may be used. The magnetic field $\hat{B}$ forces the charged particles to perform circular motion with angular frequency $\omega = |B_z| \cdot q/m$, where q and m are respectively charge and mass of the charged particles. Furthermore, in order to confine the charged particles axially, a static electric quadrupole potential $V(z, r) = V_0(z^2 - r^2/2)$ may be used.

A *Paul trap* refers to a trap that uses electric fields to trap the ions. Usually, in a Paul trap, only electric fields are used to trap the ions. In particular, usually no magnetic fields are used. In general, at least one of the electric fields of a Paul trap is alternating (e.g., oscillating), and a Paul trap may use both static as well as alternating electric fields. For example, the alternating field of a Paul trap may be an alternating electric multipole field, in particular, an electric quadrupole field. Since the switching of the voltage is often at radio frequency, these traps are also called Radio Frequency (RF) traps.

A **linear 3D trap** is a particular type of a 3D trap. Usually, in a linear 3D trap, the ions are confined radially using an alternating (AC) electric field and confined axially by static (DC) electric potentials. Accordingly, a linear 3D trap is in general also a (linear) Paul trap.

### Cooling and Read out

Using interaction with laser beams, trapped ions may be **cooled** to near their motional ground state. Such cooling of the ions may involve Doppler cooling and/or sideband cooling. However, the present invention is not limited to any particular cooling technique. Furthermore, the present invention is also not limited to a cooling of the trapped ions to the motional ground state and/or to initialize the trapped ions to in the motional ground state or any other particular known ground state. In particular, the quantum gates implementations further described below have the advantage to work also with so-called thermal or hot ions, where the motional state of the trapped ions is initially as well as during the quantum computation not exactly known. These gates even allow to perform quantum operations while the motional state of the ions is in an unknown superposition of motional energy-eigenstates states. Some cooling may still be performed e.g. in order to avoid/reduce thermal decoherence due to interactions of the trapped ions with the external environment. Initialization of the qubit states may be performed similarly by laser beam-induced transitions in individual ions.

Qubits may be **read out** by applying a resonant laser beam to detect their states by fluorescence. A rapid cycling single photon transition from one of the qubit levels to a higher excited level of the ion using such a resonant laser beam results in the emission of fluorescent photons, which may be detected, if the level is populated. If the level is not populated, no fluorescent photons will be detected apart from a randomly produced dark count.

***Motional Modes***

As mentioned above, the trapped ions may be trapped by, with, and/or within the same ion trap. In other words, the trapped ions may be part of a same "qubit *register*" or *"register of trapped ions"*. In the following, for ease of understanding, it is assumed that all trapped ions are identical (i.e. same chemical element/isotope, same charge). However, the present invention is not limited thereto, as in general different types of ions may be trapped with an ion trap and used in a quantum computer. However, usually all trapped ions have a same charge sign, i.e. each ion has a positive charge or each ion has negative charge. However, the ions do not have to have the same positive/negative charge (but may have the same positive/negative charge).

In general, the trapped ions may be cooled ions confined in free space with electromagnetic fields. When the trapped ions are sufficiently cold, the trapped ions may form a Coulomb-coupled *"ion crystal"*, in which each ion has an equilibrium position at which the Coulomb repulsion between the trapped ions balances the external confinement forces of the ion trap. For instance, the trapped ions may be located on or trapped in a line (e.g. may form a string/ linear chain of trapped ions). In other words, the equilibrium positions of the ions may be located on line. In particular, the trapped ions may line up on a trap axis. Said trap axis may be a/the symmetry axis of the trap. In particular, the ions may arrange themselves along the weakest axis of the confinement potential. The trapped ions may also be located on positions of a two-dimensional lattice (e.g. their positions may form a two-dimensional mesh).

When the ions are cooled, the ions may form a sufficiently well isolated quantum system, i.e. the displacements of the ions from their equilibrium positions are small and the motion of the trapped ions becomes quantized. Since the motion of the ions is coupled by the mutual Coulomb repulsion of the ions, it can be described by coupled harmonic oscillatory motion of the ions in terms of normal modes, where the term *"normal mode"* may refer to an oscillation of all ions with a same frequency and a fixed phase relation. It is noted that the terms *"normal mode"*, *"motional mode"*, *"common motional mode"*, *"oscillation mode"*, *"vibrational mode"*, *"collective vibrational mode"*, *"joint mode"*, or just *"mode"* and the like are used interchangeably.

Each motional mode may be described by a respective quantum mechanical harmonic oscillator. Without the laser beam implementing the quantum gate, the quantum system of N trapped ions may thus be is described by the Hamiltonian

$$\hat{H}_0 = \sum_{i=1}^{N} \hbar\omega_0 \,|1\rangle_i\langle 1|_i + \sum_{v=1}^{3N} \hbar\omega_v \, \hat{a}_v^\dagger \hat{a}_v,$$

where the first term in the Hamiltonian $\hat{H}_0$ describes the internal energy of the trapped ions, and the second term describes the external vibrational energy of the system. More specifically, $\hbar\omega_0$ is the energy difference between the qubit states (for all qubits, the $|1\rangle$ state is chosen to be the higher energy state), and $\hbar$ denotes the reduced Planck constant. Furthermore, $\hat{a}_v^\dagger$ and $\hat{a}_v$ denote the creation and annihilation operator of the harmonic oscillator of the v-th mode, respectively. The energy difference of two neighboring motional states of a mode, i.e. from the state $|n\rangle_v$ to the state $|n + 1\rangle_v$ for any n, while not changing the internal state and the state of other modes, is given by $\Delta E = \hbar\omega_v$, where $\hbar\omega_v$ is the energy of one phonon of the v-th mode. Here, $|n\rangle_v$ denotes the Eigenstate of the phonon-number operator $\hat{a}_v^\dagger \hat{a}_v$ of the v-th mode, i.e. the state that has n phonons in the v-th mode.

In general, since the motion of the ions can be quantized in three directions, as indicated by the above formula, there are 3N (orthogonal) normal modes, where N is the number of trapped ions. In case of the ions being aligned on a line, these 3 directions are two radial and one axial direction, where the axial direction is parallel to said line, i.e. is along the direction in which the ions are aligned. It is noted that the radial and axial direction of the trapped ions (also referred to as *"radial ion direction"* and *"axial ion direction",* respectively) are in general different from the radial and axial direction of a laser beam (also referred to as *"radial beam direction"* and *"beam/propagation direction",* respectively). The radial (ion/beam) directions are usually two mutually orthogonal directions that are orthogonal to the respective axial (ion/beam) direction (thus, there may be some ambiguity/choice in the definition of the radial directions).

The motional modes are common motional modes of all trapped ions. In particular, the frequencies $\omega_v$ of the motional modes are property of the (entire) system/setup including the (e.g. all) trapped ions and the trap. They may depend, for example, on one or more of the type of the ion(s), the number of ions, the trap design, and in particular the strength of the confining electro-magnetic forces of the trap. The frequency of a motional transition $\omega_v$ lies typically in a frequency range of 300 kHz to 5000 kHz.

For instance, in the case of a harmonic trapping potential, the normal modes (i.e. for N ≥ 2) include, three *"center* of mass *modes"* (COM) at frequency $\omega_{C,i}$ ($i$ = 1,2,3), where the displacement of two ions from equilibrium is the same, and three modes where the displacement amplitudes are equal in magnitude but at a given time ions on different sides of the string are displaced in opposite directions. The latter modes are also referred to as *"stretch mode"* (or *"breathing mode"*) for the axial direction and rocking modes for the radial directions. Iin general, the frequency of a stretch/rocking mode in a particular direction may be related to the frequency of the COM mode of said particular direction, e.g. the frequency of the stretch mode is usually related to the frequency of the axial COM mode according to $\omega_S = 3^{1/2}\omega_C$. In particular, in case of the ions being aligned on a line, there is a center-of-mass and a stretch mode for each of the two radial and the axial ion direction (i.e. there is one axial COM and one axial stretch mode as well as two radial COM and two radial rocking modes). It is noted that, for the sake of simplicity and ease of understanding, the explicit examples of the present disclosure usually employ a stretch mode or a COM mode for entangling the ions. However, the present invention is not limited thereto as in general any motional modes may be used for entangling the ions. In particular, the present invention is not limited to harmonic trapping potential and also applies to anharmonic trapping potentials.

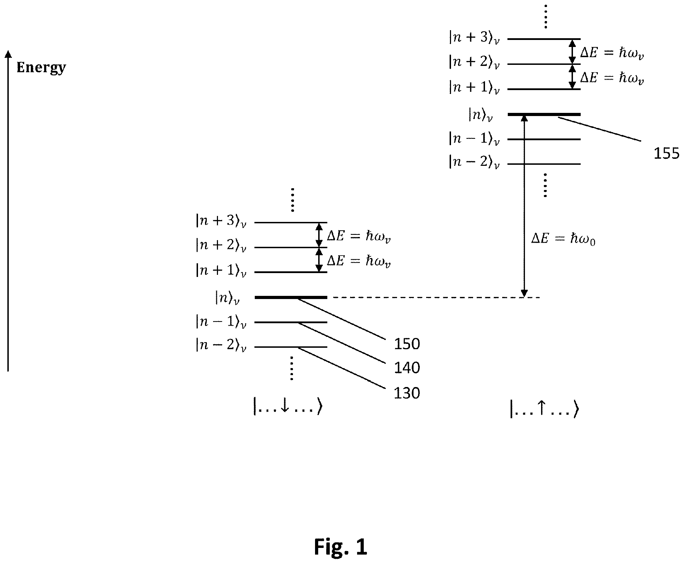

In general, the complete quantum mechanical description of the state of the ions includes a specification of the quantum state of each motional mode, e.g., in terms of the phonon number Eigenstates $|n\rangle_v$. For each state of the internal qubits (e.g. the above $|\psi_{12}\rangle$ for two qubits), each motional mode leads to a ladder of equidistant energy levels with different phonon number. This is exemplarily illustrated in **Fig. 1** with respect to one trapped ion and one motional mode. More specifically, the vertical axis of Fig. 1 corresponds to the energy of the respective state, where states at the top of the figure have a higher energy level. The state of the other qubits and other motional modes is assumed to be identical for all shown states. On the left, the considered qubit is in the $|\downarrow\rangle$ state; and, on the right in the $|\uparrow\rangle$ state. The energy difference of the internal states $|\downarrow\rangle$ and $|\uparrow\rangle$, while not changing the motional state of the ion and other qubit states, is given by $\Delta E = \hbar\omega_0$. For instance, as illustrated, the $|...\uparrow...\rangle|n\rangle_v$ state 155 and the $|...\downarrow....\rangle|n\rangle_v$ state 150, differ in energy by $\Delta E = \hbar\omega_0$. Furthermore, states that differ just in the number of phonons in the considered mode, differ in energy by $\Delta E = \hbar\omega_v$ per phonon. For instance the energy of $|...\downarrow....\rangle|n\rangle_v$ state 150 is higher than the energy of the $|...\downarrow....\rangle|n - 1\rangle_v$ state 140 and the $|...\downarrow....\rangle|n - 2\rangle_v$ state 130 by respectively $\Delta E = \hbar\omega_v$ and $\Delta E = 2\hbar\omega_v$, respectively.

Examples Entangling quantum gates are a key ingredient in the realization of quantum computers. A particular type of physical implementation of entangling gates on trapped ions is known as *"geometric quantum gates"* or *"geometric phase gates"*. Geometric phase gates are gate implementations for qubits that are represented by internal states of respective ions trapped by a same trap. They can be relatively fast as compared to other two-ion gates and furthermore allows a high fidelity since the internal states of the ions are not directly involved in the gate operation. The geometric phase gates include the Molmer-Sorensen gate (MS-gate) and the Light-Shift Gate (LS-gate), which both utilize state-dependent forces (SDFs) induced by laser beams on the addressed ions.

However, present LS-gate implementations usually employ two laser beams per ion, i.e. laser light from substantially different directions. The spatial overlap of the two laser beams is used to generate a moving standing wave. The moving of the standing wave corresponds to a modulation of the SDF induced by the standing wave. However, since standing waves cannot be generated by a single laser beam from one direction, setups to create standing waves are in general complex. For instance, two crossed or counter-propagating laser beams, or modulated retro-reflected laser beams are used. Similarly, MS-gate schemes usually require SDFs to be induced by laser beams from different directions in order to be able to address the axial motional mode. These approaches thus typically require high-NA (numerical aperture) optical access form at least two different directions at the same time in order to reach a sufficiently small focus to only illuminate specific ions. This may make the technical implementation challenging, reduce the fidelity of the entangling operation, increase the cost of the setup, and/or limit the motional modes that can be used.

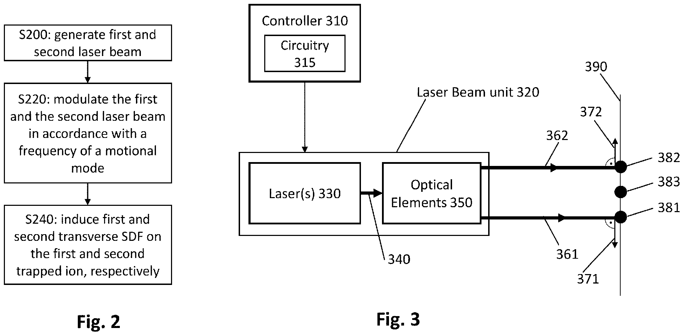

In view of the above, a method for entangling two or more trapped ions is provided (also referred to as addressed ions). As illustrated in Fig. 2, a first SDF is induced S240 on a first addressed ion using a first laser beam and, simultaneously, a second SDF is induced S240 on a second addressed ion (other than the first addressed ion) using a second laser beam. Each of the SDFs acts (on the respective ion) perpendicular to the propagation direction of the respective laser beam that induces the SDF. The first and the second SDF are respectively modulated S220 by modulating the first and the second laser beam in accordance with the frequency of a motional mode that is used for the entangling. In this way, the motional mode is excited depending on an internal state of the first and the second trapped ion, which may lead to an entanglement as further explained below.

It is noted that the entangling method(s) described herein may in general be used to entangle two or more ions, i.e. may also be used to entangle more than just two ions with each other, e.g. a 3-qubit gate may be also be implemented, as further explained below. However, for the sake of simplicity and ease of understanding, usually only the case that two ions/qubits are to be entangled using one motional mode is explicitly discussed. Regarding this, it is noted that these two ions, here also referred to as *"addressed ions",* can be selected freely from the trapped ions (i.e. that do not have to be adjacent or the like). The frequency difference between the states of the first qubit is denoted as $\omega_1$ (corresponding to an energy difference of $\hbar\omega_1$ between the $|1\rangle$ and the $|0\rangle$ state of the first ion), and the frequency difference between the states of the second qubit is denoted as $\omega_2$. There may be ions trapped in the same trap other than the addressed ions, such as ion 383 in Fig. 3. These other ions are in general not subjected, during the entanglement operation, to laser beams and, thus, qubits represented by these other ions are not changed by the gate operation. However, it is also possible to perform single-qubit operations on some or all of the other qubits while performing the entanglement operation on the two addressed ions. Using the stretch mode for performing the entanglement, i.e. selecting the stretch mode as the *"used mode"*, may reduce decoherence due to interaction with the environment. It is however noted that the present invention is not limited to the use of a single or specific motional mode, the entangling of just two ions, and/or a specific gate implementation. In particular, similar operations may be used to implemented quantum gates on more than two trapped ions.

As illustrated in Fig. 2, the method may also include a step of generating S200 the first and the second laser beam. However, the laser beams may also be received from an outside source. It is noted that some or all of the steps may be performed at the same time, e.g. part of a same step. For instance, the modulation S220 of a laser beam may be considered part of the generation step S200, e.g. there may be one step of generating a modulated laser beam. Furthermore, as further explained below when discussing the addressing unit, the modulation of the laser beams may be performed in a single step. In particular, one laser beam may be modulated, and the laser beams addressing the ions may be obtained by splitting said one modulated laser beam into multiple laser beams and directing them to the respective ions (i.e. directing laser beams obtained by the splitting to different ions). However the present invention is not limited thereto as in general, each laser beam may be generated and modulated separately from the other laser beam(s), and/or there may be one separate step of inducing S240 an SDF for each addressed ion.

Moreover, it is noted that the modulation S220 of a laser beam may be performed after the inducing S240 of an SDF on the respective ion has been started. In other words, the order of the steps S220 and S240 may be reversed. In general, as further explained below steps, S220 and S240 are performed for respective time periods, which overlap. In other words, there is a time period (i.e. the gate time) in which both steps S220 and S240 are simultaneously performed (on both/all addressed ions).

In accordance with the above method, an apparatus for controlling a first and a second laser beam to entangle two or more trapped ions is provided. As illustrated in **Fig. 3,** the apparatus comprises circuitry 315 configured to control simultaneously: (i) a first laser beam 361 to induce a first SDF 371 on a first addressed ion 381, and (ii) a second laser beam 362 to induce a second SDF 372 on a second addressed ion 382. Each of the SDFs acts (on the respective ion) perpendicular to the propagation direction of the respective laser beam that induces the SDF (e.g. the circuitry 315 in configured to control the laser beams 361 and 362 to induce perpendicular SDFs). The first and the second SDF are respectively modulated by modulating the first and the second laser beam in accordance with the frequency of a motional mode that is used for the entangling (e.g. the circuitry 315 in configured to modulate the laser beams 361 and 362 and/or to modulate the induced perpendicular SDFs). In this way, the motional mode is excited depending on an internal state of the first and the second trapped ion. Fig.3 further illustrates that the first 381 and the second trapped ion 382 may be aligned on a trap axis 390, on which there may be also other ions, such as ion 383.

Usage of a transverse SDF, e.g. induced by a transverse gradient, requires only *one laser beam per ion* and may even allow to deliver all these beams to the respective ions from the same direction using the same optics (cf. addressing unit). As further explained below, such a single/one *"laser beam"* may include light of different frequencies (multi-chromatic light) and/or may be obtained by superposing/overlapping a plurality of laser beams with different beam shapes. These beam components (with different shape and/or frequency) may, in particular for practical reasons, have (slightly) different k-vectors, and thus, the laser beam addressing an ion may include beam components with (slightly) different k-vectors. However, even in such a case, due to usage of a transverse SDF, optical access to the addressed ion is only required from one direction. For example, one could use a single optical deflection device (e.g. one AOM or one AOD) and a single high NA objective to address two or more trapped ions. In particular, the above method/apparatus, may allow to entangle two or more trapped ions by illuminating each of said two or more ions with (just/only) one laser beam per addressed ion. This may e.g. *reduce the complexity* of the entangling setup (e.g. compared to the case where a standing wave is used), which is an advantage for all ion trap architectures, in particular also for surface traps, where optical access is typically limited. Using one laser beam, may also allow to increase the fidelity of the entangling operation as there are interferometric instabilities between the two beam-paths.

Furthermore, this may allow easy access to motional modes perpendicular to the laser beam propagation and, thus, may allow for more versatile ion-ion interactions. Thus, easy access to all motional modes may become possible (e.g. access to the one axial mode and two radial modes of a linear ion chain). For instance, easy access to the axial modes in 3D linear Paul traps, and/or easy access to specific/any in-plane modes in 3D Paul traps for planar crystals, may be facilitated.

Thus, entangling two or more trapped ions may become easier (single direction, easer optical access) and more versatile (axial and radial gates/modes). The simplicity may further enhance the compatibility of laser-based entangling gates with various ion trap designs (such as e.g. 3D linear Paul traps, 3D planar-crystal Paul traps, 2D surface traps). In particular, the method/apparatus may be used implement a quantum gate on a first and a second qubit, in particular a LS gate and/or a $\hat{\sigma}_z\hat{\sigma}_z$ gate. For this, two internal states of one addressed trapped ion may be used to model a first qubit, and two internal states of the/another addressed ion may be used to model a second qubit. A $\sigma_z\sigma_z$ gate refers to a gate implemented via an interaction Hamiltonian with a term proportional to $\hat{\sigma}_{1,z} \otimes \hat{\sigma}_{2,z}$, where

$$\widehat{\sigma}_{i,z} = \begin{pmatrix} 1 & 0 \\ 0 & -1 \end{pmatrix}$$

is the (effective) Pauli spin z-matrix of the i-th ion with respect to the two qubit states of the respective ion. That is, e.g., $\hat{\sigma}_{1,z}$ operates on the qubit states of the first ion according to $|0\rangle \mapsto |0\rangle$ and $|1\rangle \mapsto -|1\rangle$. In other words, the implemented quantum gate may be represented in the $\{|00\rangle, |01\rangle, |10\rangle, |11\rangle\}$) basis as a diagonal matrix with diagonal entries diag($e^{i\phi}$, 1, 1, $e^{i\phi}$) or diag(1, $e^{i\phi}$, $e^{i\phi}$, 1) (these two diagonal forms only differ by a global, unobservable phase).

It is however noted that the present invention applies to the generation of entangled states of two or more trapped ions in general, and is not limited to quantum computing. In particular, although usually discussed in the context of quantum computing, the techniques described here may quite generally be used to entangle trapped ions also in/for other applications than quantum computing. Furthermore, it is noted that it generally depends on the initial state of the qubits/trapped ions whether or not the qubits/trapped ions are entangled after the operation of a two-qubit gate. In other words, an entangling gate usually only generates entangled states from specific initial states and not from any/every initial state. The terms *"entangling gate"* and *"method for entangling"* and the like thus here refer to a gate/method that generates an entangled state from at least one initially unentangled state of the addressed ions.

### *Circuitry and Controller*

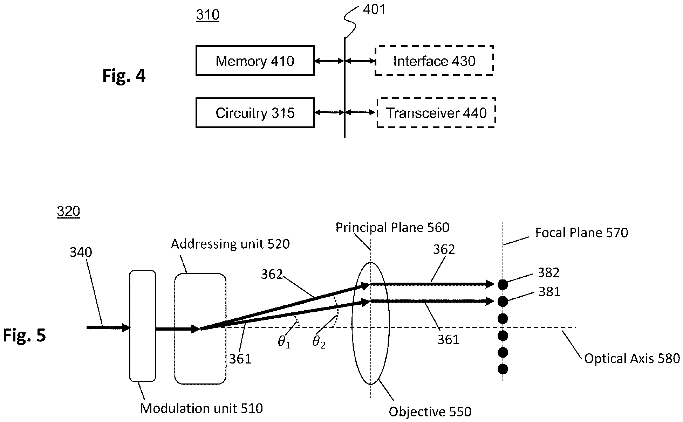

In general, the circuitry 315 may be configured to control the laser beam in accordance with any method described herein, i.e. the circuitry may be configured to control optical elements to obtain any laser beam described herein (e.g. the modulation, frequency, beam shape, etc. of the laser beam(s)). In the same manner, an entangling method according to the present invention may include any step the apparatus (in particular the circuitry 315) is configured to perform. That is, what is described herein may apply to both the entangling method and the apparatus for entangling unless context indicates otherwise. The circuitry or processing circuitry 315 may be part of a controller, which may include other hardware and/or software. **Fig. 4** shows an exemplary structure such a controller 310. As illustrated, the controller may include the circuitry 315, which performs the controlling of the laser beams (e.g. the laser beam unit 320) and may additionally control further components included in the apparatus for entangling the ions, a memory 410, and possibly a transceiver 440 and a user interface 430. The controller may be, for instance a (part of) a computing device or any other suitable device. The memory 410 may store the program, which may be executed by the processing circuitry 315 to perform steps of any of the methods described herein. The processing circuitry 315 may comprise one or more processors and/or other dedicated or programmable hardware. The transceiver 440 may be wireless and/or may be configured to receive and/or transmit (controlling) signals. The controller 310 may further include a user interface 430 for displaying messages or status of the device, or the like and/or for receiving a user's input. For instance, the controller may be configured to receive input of a particular unitary operation that is to be performed on the trapped ions, to determine the properties of laser beams that implement said unitary operation (this may be a sequence of laser beams, i.e. the controller may first decompose the received unitary operation into a sequence of predetermined universal gate operations and then perform said sequence), and to then control the laser beam unit/laser beams accordingly as mentioned above.

A bus 401 may interconnect the memory, the processing circuitry, the transceiver, and the user interface. It is noted that the controller may be implemented by any hardware means, apart from using a general purpose processor, it can be implemented as a micro-controller, by means of a programmable hardware such as field programmable gate array (FPGA) or as a specialized hardware such as an application-specific integrated circuit (ASIC). Any combination of the above-mentioned hardware and possibly a software may be used.

### *Laser Beam Unit*

The apparatus may further comprise the laser beam unit 320, but the present invention is not limited thereto, as the apparatus/the circuitry may only be configured to control the laser beam unit 320. It is further noted that the laser beam unit 320 is not limited to emitting two (different) laser beams 361 and 362. In general, the laser beam unit may be configured to emit two or more laser beams and the circuitry 315 may be configured to control said two or more laser beams for entangling two or more ions (in particular, the laser beams 361 and 362 may be the same laser beam if the two addressed ions are adjacent and a broad beam is used). Furthermore, in general, the laser beam unit 320 may include one or more lasers 330, e.g. stabilized diode laser(s). However, the present disclosure is not limited to any particular laser source and other lasers than diode lasers such as solid-state crystal lasers could be used. There may be one laser beam 340 from one laser 330, from which a plurality of laser beams may be obtained by using beam splitters included in the optical elements 350, or a plurality of laser beams 340 generated by a plurality of respective lasers. The present invention is not limited to any particular scenario. In particular, the laser beam unit 320 may also not include any laser and the circuitry 315 may be configured to control a laser beam unit 320 that receives light (one or more laser beams) from an external source.

Moreover, the laser beam unit 320 may include optical elements 350 to generate appropriate laser beams, having properties as described herein. The optical elements 350 may include active optical elements 350, such as acousto-optic modulators (AOMs) and acousto-optic deflectors (AODs), and/or passive optical elements 350 (e.g. lenses, attenuators, phase plates). As a further example, the active optical elements may include Spatial-Light-Modulators (SLMs), such as digital micromirror devices and/or liquid crystal devices. The circuitry may be configured to control the laser(s) (e.g. the power and/or frequency of the emitted light) and/or the active optical elements to implement one or more of the methods described herein. In particular, the circuitry, 315 may be configured to address specific ions (i.e. direct specific beams to specific ions such that the ions sits in the laser beam at a specific predetermined radial distance from the laser beam axis), to modulate the laser beams, to shape the laser beams to a predetermined shape, and/or in particular to adjust/generate the laser beams to induce a transverse SDF at the position on the respective ion.

*Optical Elements*

As illustrated in **Fig. 5,** the optical elements 350 may include a modulation unit 510, which is configured to perform, as further described below, the modulation of the laser beam(s) 340 when controlled by the circuitry. Furthermore, the optical elements 350 may include an objective 550 configured to focus the first laser beam 361 and the second laser beam 362 at a position of the trapped ions. More specifically, the first laser beam 361 and the second laser beam 362 may pass through at least one common lens 550 within the optical elements 350. For example, when the ions are trapped in a linear ion trap, the trap axis 390, on which the ions align, may be included in the focal plane 570 of the objective 550. Such an objective including at least one common lens, which is passed by both of the laser beams, facilitates the excitation and/or entanglement of the trapped ions by a single-sided access to the trap that confines said ions.

In general, some or all laser beams may be directed to the addressed ions using the same objective. This is also illustrated in Fig. 5, where the laser beam unit is exemplarily assumed to include an addressing unit 520, which may also be controlled by the circuitry 315. Such an addressing unit facilitates controlling the direction of the laser beams individually/separately with respect to the trapped ions and/or to focus the laser beams at/to different positions of a region to which the ions are confined. This may allow addressing specific ions out of a plurality of trapped ions (as illustrated there may be other ions that are not addressed). More specifically, as illustrated in Fig. 5, the first 361 and the second laser beam 362 may be directed to the first 381 and the second trapped ion 382 using a same objective 550 by adjusting an angle of incidence of the beams with respect to the principal plane 560 of the objective 550 (or lens 550). This may facilitate addressing specific ions out of a plurality of trapped ions and/or to direct a laser beam to specific positions using a single objective. In other words, a single high quality objective may be used for directing each beam to the respective ion. It is noted that, if the lens is not a thin lens as in Fig. 5, the angle of the incidence is the angle with respect to the front principal plane (i.e. the first of the principal planes the laser beams cross).

Alternatively or in addition, the beams may be directed to the desired position by adjusting the inclination angle of the laser beams with respect to the optical axis (usually an axis of rotational symmetry of a lens/objective). This is illustrated in Fig. 5, where the optical axis of the objective 550 is denoted and the inclination angles of the first and second beam with respect to the optical axis 580 are indicated as $\theta_1$ and $\theta_2$, respectively.

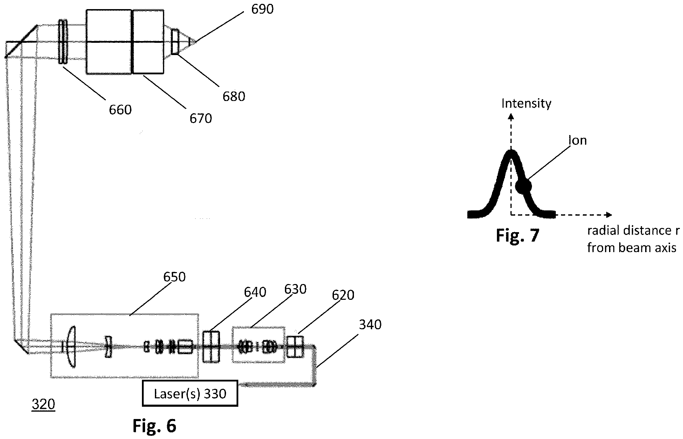

**Fig. 6** illustrates an exemplary optical paths of two or more laser beams 340 (it is noted that at the position indicated by "340", there may be only one laser beam of mono- or multi-chromatic light). The exemplary setup includes a first AOD 620, a second AOD 640, a 4F-relay optics 630, an expansion optics 650, collimation lenses 660 and an objective 670. Said optical components provide examples for the static (passive) as well as for the dynamically controlled (active) optical components mentioned above.

More specifically, the addressing unit 520 may for instance include optical elements 620, 630, 640 and 650, where the 620 and 640 are actively controlled by the controller 310. The first AOD 620 is used to generate, from a single laser beam 340, two (or more) laser beams with different respective directions. It is noted that the frequency(s) of the two or more laser beams generated by the first AOD 620 may be slightly different and/or be shifted with respect to the frequency(s) of the laser beam 340. These laser beams, obtained by the splitting of the AOD 620, are then directed to the individual addressed ions. The second AOD 640 is used to further increase the deflection and to compensate the frequency offset(s) due to the first AOD 620. Thus, if it is not of particular importance that the laser beams addressing different ions have the same frequency (which is the case for the LS-gate implementations discussed below), the AOD 620 and 4F-relay optics 630 may be omitted. Das beam-shaping may be performed by the expansion optics 650 and the following optical elements.

Moreover, Fig. 6 illustrates the vacuum window 680, which provides optical access to the ion trap, and the focusing of the laser beams on the trap axis 690.

*Transversality of SDF*

In general, each SDF is perpendicular to the propagation direction of the laser beam that induces said SDF (i.e. perpendicular to the wave vector vector). For instance, if there are two addressed ions (i.e. a *"first"* and a *"second"* ion), the SDF induced on the first addressed ion acts perpendicular to the propagation direction of the laser beam addressing/illuminating the first ion; and the SDF, induced on the second addressed ion, acts perpendicular to the propagation direction of the laser beam addressing/illuminating the second ion. In other words, the terms *"perpendicular"*, *"transverse"* and *"transversal"* are used interchangeably and refer to a right angle between the SDF and the propagation direction of the laser beam that induces said SDF. In other words, the SDF is orthogonal to the propagation direction of the laser beam at the position of the addressed ion (cf. Fig. 3, where the propagation direction of the laser beam 361 is perpendicular to the SDF 371, and the propagation direction of the laser beam 362 is perpendicular to the SDF 372).

It is noted that a laser beam may (and in general will) induce other forces than the transverse SDF on the ion. Such other forces may in general be state-dependent or be state-independent. Furthermore, such other forces may be perpendicular or not be perpendicular (e.g. even parallel). Thus, in other words, an SDF may be a (perpendicular) component of the force(s) induced by a laser beam on an ion. The SDF may be the entire perpendicular component of the force(s) induced by the laser beam, or may be a part of the said perpendicular component.

*Generation of SDF and Transverse Gradient*

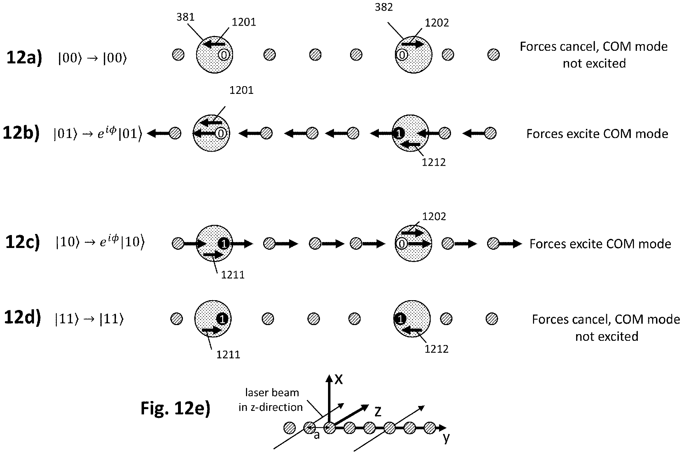

As mentioned above, on each of the addressed ions, a transverse SDF is induced simultaneously. For instance, if there are two addressed ions (i.e. a *"first"* and a *"second"* ion), a first and a second SDF are induced simultaneously on the first and second addressed ion, respectively. In other words, there is a one-to-one correspondence between SDFs and addressed ions (i.e., SDF refers to the force acting on a specific ion, not a force field that may act on multiple ions). The SDFs acting on different ions may be identical in magnitude and direction (for corresponding qubit states); or, as illustrated in the example of Fig. 12, the SDFs acting on different ions may be identical in magnitude and opposite in direction (for corresponding qubit states). However, the present invention is not limited such scenarios and in general the SDFs on different ions and states may be different. The SDF is induced by directing the respective laser beam to the respective ion, so that the ion *"sits"* (is located) in the electromagnetic field of the laser beam. Where the SDF is induced with a laser beam with a non-constant intensity gradient in radial beam direction, the particular position (e.g. the radial distance from the beam axis) of the ion within the laser beam may also be relevant.

In general, each SDF is induced by one (e.g. only one or a single one) laser beam (e.g. from one direction). Other wordings than that may be used interchangeably to *"induced"* are that the laser beam *"causes"* or "exerts" the SDF. In general, a different laser beam may be used for each ion (e.g. there may be a one-to-one correspondence between laser beams and addressed ions). However, in general, for instance if two addressed ions are adjacent/neighboring trapped ions, two or more addressed ions may also be illuminated with a same laser beam. Said same laser beam may still induce different SDFs on the ions, as e.g. the intensity gradient of the laser beam may be position-dependent (e.g. a Gaussian beam).

In general, an (e.g. each/any) SDF may be generated by a (non-zero) transverse component of a gradient of the laser beam that induces said SDF. A *"transverse"* component of the gradient is a component that is orthogonal to the propagation direction of the laser beam, i.e. orthogonal to the beam axis. For instance, the orthogonal component $\vec{g}_\perp$ of a gradient $\vec{g}$ may be the projection $\vec{g}_\perp = \vec{g} - \vec{k}(\vec{g} \cdot \vec{k})/(\vec{k} \cdot \vec{k})$ of the gradient onto the plane orthogonal to the wave vector $\vec{k}$, which corresponds to the propagation direction of the laser beam. The gradient $\vec{g}_\perp$ may also be the projection $\vec{g}_\perp = (\vec{g} \cdot \vec{o})\vec{o}$ of the gradient $\vec{g}$ onto an orthogonal direction $\vec{o}$, where the orthogonal direction $\vec{o}$ is a direction orthogonal to the wave vector $\vec{k}$ of the laser beam (i.e. $\vec{o}$ may be one of the radial beam directions). In general, the orthogonal direction $\vec{o}$ and/or the direction of the orthogonal component $\vec{g}_\perp$ are the oscillation direction of the used motional mode (also for projection onto the orthogonal plane). It is noted that there may be another component of said gradient $\vec{g}$ that is also orthogonal to the propagation direction of the laser beam other than the transverse/orthogonal component that generates the SDF. Furthermore, this other transverse component may also induce a SDF. This other SDF may also excite a motional mode, or may not excite any other motional mode, e.g. since said other SDF is not modulated to do so. In general, only the components of the gradient that have an overlap with the direction of a motional mode contribute to the interaction (excitation/de-excitation of said mode). The other components of the gradient could excite other motional modes, which may be suppressed by selection of a suitable alignment of the laser beam with respect to the ion and/or a suitable modulation frequency.

Furthermore, it is noted that the gradient is a gradient of the laser beam at the position of the addressed ion. Thus, the SDF, acting on an ion, is induced by a gradient of the laser beam at the position of said ion. Moreover, the gradient is in general a gradient of the electromagnetic field of the laser beam. In other words, the electromagnetic field of the laser beam may have, at the position of the trapped ion, a gradient component that is perpendicular to the propagation direction of the said laser beam. In particular, the gradient of the laser beam may be

- (i) the intensity gradient of the electromagnetic field of the laser beam (in particular the gradient of the amplitude of the electric or magnetic field of the laser beam),
- (ii) a phase gradient of the electromagnetic field of the laser beam, and/or
- (iii) a polarization gradient of the electromagnetic field of the laser beam.

It is noted that a laser beam may have more than one of the above gradients (i) to (iii) to be non-zero and contributing to the generation of the SDF. In other words, an SDF may in general be generated by the perpendicular component of one or more of the gradients (i) to (iii). It is further noted that, e.g. in case of a phase and/or polarization gradient, the SDF may also be induced by an orbital angular momentum (OAM) of the laser beam.

More specifically, the electric field of a laser beam with frequency $\omega_L$ at position $\vec{r} = (x, y, z)$ and time $t$ may be written as

$$\vec{E}_L(\vec{r}, t) = \vec{\varepsilon}_1(\vec{r}) E_0(\vec{r}) e^{i\varphi(\vec{r})} e^{-i\omega_L \cdot t}$$

where $E_0(\vec{r})$ and $\varphi(\vec{r})$ are respectively the real valued field strength/magnitude and phase, defining the intensity of the laser beam, i.e. $I(\vec{r}) = |E_0(\vec{r})|^2$. It is noted that the position vector $\vec{r}$ refers to a three-dimensional, and is not limited to the radial directions. For instance, for a plane wave, we have $\varphi(\vec{r}) = \vec{k}z$. It is noted that a part of the $\vec{r}$-dependence of the polarization vector $\vec{\varepsilon}_1(\vec{r})$ may be absorbed into the $e^{i\varphi(\vec{r})}$ part, may making $\vec{\varepsilon}_1(\vec{r})$ a real quantity; or $e^{i\varphi(\vec{r})}$ may be absorbed in to the polarization vector. In general, the above laser beam induces on a ion (i) a so-called dipole force $\vec{F}_{Dip1} \propto \vec{\nabla}(E_0(\vec{r}))^2$, proportional to the gradient of the intensity; and/or (ii) a force $\vec{F}_{phase}$ oc $(E_0(\vec{r}))^2 \vec{\nabla}\varphi(\vec{r})$, proportional to the intensity and the phase gradient. As can be seen, both these forces may have a transverse component when the respective gradient (intensity/phase gradient) has a non-zero component in a direction orthogonal to the propagation direction of the laser beam.

Summarizing, the gradient (e.g. intensity, phase, and/or polarization gradient) of a laser beam may be used to exert an SDF on the ion. The SDF, in turn, can be harnessed, together e.g. with an appropriate modulation, for entanglement generation as further explained below.

**Beam Shape**

For instance, a laser beam with an intensity/amplitude gradient may be realized by using a laser beam having a particular shape. For instance, the shape of a (one or more, each) laser beam used for inducing the SDF may have a Gaussian beam shape, a Super-Gaussian, a Laguerre-Gaussian, and/or a Hermite-Gaussian beam shape (or beam gradient). These beam profiles have a transverse amplitude (and intensity) gradient that is non-constant in the radial/transverse beam direction. This may in turn allow to modulate the gradient (and thus the SDF) by changing the position and/or direction of the laser beam with respect to the addressed ion, as further explained below. It is also noted that the present disclosure uses the terms *"beam form", "beam shape"* and *"beam profile"* interchangeably.

To be specific, the electric field of a laser beam with a Gaussian beam shape may be given as $|\vec{E}_L(r, z, t)| = |f(z, t)|e^{-r2/w2}$, where $f(z, t)$ is a factor only depending on the time and the position z in propagation direction of the laser beam (the direction of the wave vector $\vec{k}$), r is the radial distance from the center axis of the beam, and w is parameter defining the distance from the center axis at which the amplitude is 1/e of the central amplitude value (w may depend on the position in z direction, i.e. w = $w(z)$, or w may be (essentially) constant/independent of z, e.g. in the vicinity of the ion(s)). The specific beam shapes or beam profiles, mentioned above, may be used to increase the gradient component (e.g. intensity or polarization gradient component) in transverse direction at the position of the ion. For instance, a laser beam may be directed such that the ion (e.g. its equilibrium position) is placed at the location of the maximum transverse gradient of a Gaussian laser beam as illustrated in *Fig. 7.* More specifically, the maximum intensity gradient of a laser beam with a Gaussian transverse beam profile $I(r)$ can be estimated as

$$\frac{\partial I}{\partial r}(r = w/2) \propto \frac{2\pi \mathrm{NA}|E_0|^2}{\sqrt{e}\lambda}$$

As can be seen from the equation above, a high numerical aperture (NA) optics may be used increase the intensity gradients in transverse direction r. In other words, a tightly focused laser may be used to increase the intensity gradient. This may facilitate to address individual and/or specific trapped ions (i.e. to induce only force(s) on the addressed ion(s) and not on other trapped ions).This may, in turn, allow to implement entangling gates that act only on a subset of m ions of a qubit register of n>m ions. A large intensity gradient may result in a larger SDF, which may allow faster gate times.

In general, (new) beam shapes may also generated by superposing beams with different shapes. In other words, a laser beam addressing an ion may include two or more beam components (e.g. electro-magnetic field components) that have different beam shapes, e.g. may include two or more spatially different beam components. Alternatively or in addition (and, in particular when the beam components have the same beam shape) the beam shapes of the beam components may be displaced with respect to each other (e.g. in the radial direction of the laser beam). Furthermore, alternatively or in addition, the beam components may have at the position of the addressed ion: different polarizations, different polarization gradients, different phases, different phase gradients, and/or different directions of the electric or magnetic field. Thus, the laser beam may include two or more beam components which have different electromagnetic field properties at the position of the addressed ion.

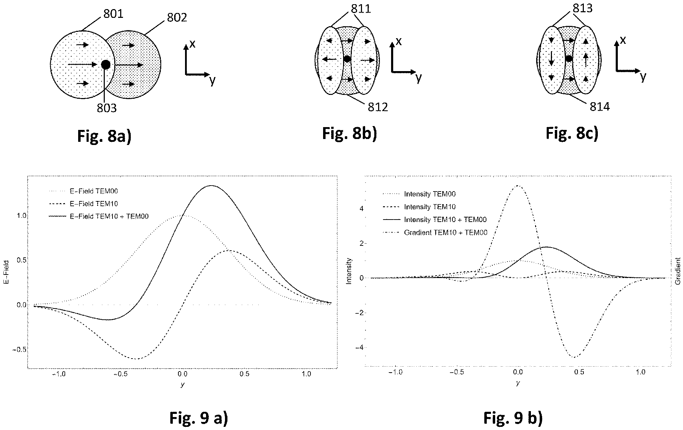

This may allow to generate special beam shapes from *"standard"* beam shapes. In general, one, more than one, or each of the beam components may be a Hermite-Gaussian beam (e.g. may have a beam shape of a respective Hermite-Gaussian mode). For instance, as illustrated in *Fig.* **8a**), two Gaussian beams (e.g. $TEM_{00}$ beams) may be overlapped with each other.

It is noted that Hermite-Gaussian modes are typically designated $TEM_{lm}$, where TEM stands for transverse electro-magnetic. The time-independent part of the electric field of a Hermite-Gaussian beam $TEM_{lm}$ propagating in z-direction can be described as

$$E_{l,m}(x, y, z) = E_0 \frac{w}{w(z)} H_l\left(\frac{\sqrt{2}y}{w(z)}\right) H_m\left(\frac{\sqrt{2}x}{w(z)}\right) e^{-\frac{x^2+y^2}{w^2(z)}} e^{-i\frac{k(x^2+y^2)}{2R(z)}} e^{i\psi(z)} e^{-ikz},$$

$$z_R = \frac{\pi w^2 n}{\lambda}, w(z) = w\sqrt{1 + \left(\frac{z}{z_R}\right)^2}, R(z) = z\left[1 + \left(\frac{z_R}{z}\right)^2\right], \psi(z) = (l + m + 1)\arctan\left(\frac{z}{z_R}\right),$$

where n describes the refractive index, $\lambda$ is the wavelength of the Hermite-Gaussian beam $TEM_{lm}$ (corresponding to the wavelength of the beam component), $k = 2\pi/\lambda$ is the wave number of the Hermite-Gaussian beam, w is the waist radius of the Hermite-Gaussian beam, $H_l$ and $H_m$ are respectively the l-th and m-th Hermite polynomials, and *x* and *y* are two mutually orthogonal radial beam directions. $TEM_{lm}$ thus refers to the Hermite Gaussian mode with Hermite polynomial factors of order numbers l and m. It is noted that, in the above equations, only describe the magnitude of the electric field of a $TEM_{lm}$ beam; the direction of the electric field may be e.g. constant in a radial direction (linear polarized $TEM_{lm}$ beam) or e.g. change periodically in the radial plane (circular polarized). Furthermore, the *x* = y = 0 line corresponds/defines the beam axis of this Hermite-Gaussian beam $TEM_{lm}$, which may be different or identical to the beam axis of other beam components (cf. example of Fig. 8a). In general, the electric field of corresponding Hermite-Gaussian beams with beam axis shifted to ($x_1$, $y_1$, 0) are given by $E_{l,m}(x-x_1, y-y_2, 0)$.

Regarding this it is noted that the black arrows in Fig. 8a), as well as in Fig. 8b) and 8c), indicate the polarization and the size of electric field of the respective beam component. Thus, for instance in Fig. 8a) the two beam components 801 and 802 are linearly polarized in the y-direction. Furthermore, Fig. 8a) shows that the addressed ion 803 is at the center of the two laser beam components, but displaced to the right from the axis of the beam component 801 and displaced to the left from the axis of the beam component 802. In other words, the ion 803 is in the middle (e.g. at ($x_1$/2 + $x_2$/2, $y_1$/2 + $y_2$/2,0)) between the axis of the beam component 801 (e.g. at ($x_1$, $y_1$, 0) and the axis of the beam component 802 (e.g. at ($x_2$, $y_2$, 0)). The two beam components 801 and 802 thus induce SDFs in opposite directions on the ions (i.e. towards or away from the respective beam component axis). The intensities of the beam components 801 and 802 may therefore be modulated with the same frequency, but 180° out of phase. This setting may be used to increase the SDF on the ion using two laser beam components (more specifically, the average (over the gate time) excitation of the motional mode due to the SDF is increased). More specifically, in general the laser beam may include two beam components with a same shape, but displaced from each other in a radial direction of the laser beam. Such a laser beam may be (i) directed to the addressed ion such that the two laser beam components are displaced in opposite (radial) direction with respect to the ion, and (ii) intensity modulated 180° out of phase with respect to each other (otherwise the intensity modulation may be identical).

As another example, which is illustrated in **Fig. 8b),** a laser beam addressing an ion may include two beam components with different beam shapes. In general, the axis of these two beam components may have a same beam axis (i.e. not radial displacement of the beam components with respect to each other) or they may be displaced in radial direction with respect to each other.

For instance, one of said two components may have a Gaussian beam shape (e.g. a $TEM_{00}$ beam shape) and the other beam component may have a Hermite-Gaussian beam shape (e.g. a $TEM_{10}$ beam shape). As illustrated in Fig. 8b), the ion may be at the center of the laser beam axis, which is identical to the axis of the Gaussian beam component 812 as well as identical to the axis of the Hermite Gaussian beam component 811. In this configuration, the laser beams can be either co- or counter-propagating.

**Fig. 9a)** shows (for a same time, when both beams are modulated in-phase): the y-dependence (y being a radial distance from the beam axis, for example the trap axis) of the electric field $E_{1,0}$ of the first beam component 811 ($TEM_{10}$, dashed line); the y-dependence of the electric field $E_{0,0}$ of the second beam component 812 ($TEM_{00}$, dotted line); as well as the resulting sum (solid line) of the electric fields, corresponding to the electric field of the laser beam addressing the ion. As illustrated in Fig. 8b), the electric fields of the beam components are both polarized in y-direction. That the electric field of the first beam component is negative for negative y (cf. Fig. 9a)) thus means that the electric field is directed in opposite direction to the y-direction. Thus, the electric fields of the first and the second component cancel for negative y.

The electric fields of the individual beam components 812 and 811, corresponding to a $TEM_{00}$ and a $TEM_{10}$ Hermite Gaussian beam shape, can respectively be described as (at $x = z = 0$, thus e.g. along the trap axis)

$$E_{0,0}(0, y, 0) = E_0 e^{-\frac{y^2}{w^2}}$$

$$E_{1,0}(0, y, 0) = E_1 \frac{2\sqrt{2}y}{w} e^{-\frac{y^2}{w^2}}$$

**Fig. 9b)** shows (also for a same time, when both beams are modulated in-phase): the y-dependence (exemplarily for fixed $x = z = 0$) of the intensity $I_{0,0}(0, y, 0) \propto |E_{0,0}(0, y, 0)|^2$ of the second beam component (dotted line); the y-dependence of the intensity $I_{1,0}(0, y, 0) \propto |E_{1,0}(0, y, 0)|^2$ of the first beam component (dashed line); the y-dependence of the resulting intensity $I(0, y, 0) \propto |E_{0,0}(0, y, 0) + E_{1,0}(0, y, 0)|^2$ of the laser beam addressing the ion (solid line); and the y-dependence of the gradient $\frac{\partial I}{\partial y}(0, y, 0)$ of the intensity (dotted-dashed line). As can be seen, from Figs. 8b), 9a) and 9b), the electric field of the Hermite-Gaussian beam is zero at the beam axis ($y = x = 0$) but the gradient of the laser beam is rather large at the beam axis. In other words, if an ion is placed near or at the center of the beam axis of such a laser beam, a large SDF can be induced on the ion, while the intensity of the laser beam at the position of the ion may be comparatively small. Thus, such superposition of different beam shapes can be used to obtain a beam shape with large gradient but small intensity at a particular radial position at which the ion may then be placed.

In the present case, the intensities of the two beam components may be modulated together (in particular, with the same frequency and without phase offset as in the example of Fig. 8a)). For instance, the intensity of the (entire) laser beam, including the two beam components 811 and 812, may be modulated. However, it is also possible to modulate the two beam components with different frequencies, which leads to a phase difference between the two beam components that changes over time. This means that the relative sign between the electric fields of the two components at a given position changes over time. The sign of the intensity gradient at the position of the ion then changes (periodically) over time, since the intensity maximum of the beam superposition oscillates periodically between a position at the right and a position at the left of the ion. For instance, the beam component 811 could be modulated with frequency $\omega_{Mod}$ and the beam component 812 could be modulated with $2\omega_{Mod}$, leading to a relative phase accumulation of size $\pi = \Delta\omega_{Mod}t$ every $t = \pi/\omega_{Mod}$ seconds. The position of the intensity maximum thus periodically changes between left and right of the ion with frequency $\omega_{Mod}$. This may be used to decrease the gate time as the motional mode can be continuously excited or de-excited in comparison to the case of a single Gaussian beam component where the SDF only acts in one direction.

Assuming that the ion is positioned in the center of the laser beam components the intensity and the gradient of the intensity of the laser beam including the two beam components can be estimated as

$$I(0,0,0) \propto |E_0|^2$$

$$\frac{\partial I}{\partial y}(0,0,0) \propto \frac{4\sqrt{2}|E_0 E_1|}{w} = \frac{4\sqrt{2}|E_0 E_1|\pi \mathrm{NA}}{\lambda}$$

In particular, if only the intensity and thus the electric field amplitude $E_1$ of the first beam component 811 ($\mathrm{TEM}_{10}$) is increased, the intensity gradient (and thus the SDF) is increased, whereas the intensity at the position of the ions stays constant. Typically, in state-of-the-art implementations of laser-based entangling gates, there exists a scattering limit, that limits the fidelity of an entangling gate because the rate of scattered photons (that induce decoherence) and the strength of the SDF depend on the same electric field amplitude. In the presented method, due to the overlap of two laser beams, this dependency can be decoupled as described and therefore the scattering limit can be significantly improved.

Another possible example is illustrated in *Fig. 8c),* where the laser beam configuration is the same compared to Fig. 8b) except for the orientation of the polarization of the first beam component. As shown in Fig. 8c) the linear polarization of the first Hermite Gaussian beam $\mathrm{TEM}_{10}$ component 813 is oriented orthogonal with respect to the linear polarization of Gaussian beam $\mathrm{TEM}_{00}$ component 814. Thus, in general, the two beam components having different shapes may also be linearly polarized in mutually orthogonal radial directions.

In Fig 8c), when the electric fields of the beam components 813 and 814 are modulated with a same frequency but 90° or 270° out of phase with respect to each other (such that one beam component has its maximum intensity when the other component has zero intensity and vice versa), the superposition of the two beam components 813 and 814 leads to two circular polarization components: a first circular polarization component where the right part of the beam component 813 (the part with the arrows point to the top in Fig. 8c)) overlaps with the beam component 814, and a second circular polarization component where the left part of the beam component 813 (the part with the arrows pointing down in Fig. 8c)) overlaps with the beam component 814. These circular polarization components are in phase and opposite circular polarizations (also known as left/right rotating, or sigma plus/minus). Thus, for instance, in Fig. 8c) left of the ion there may be sigma minus polarized light and right of the ion there may be sigma plus polarized light. Such a polarization gradient may give rise to (or be used to implement) an SDF that acts in opposite directions on the two qubit states of the ion (e.g. the qubit states interact differently with the two circular polarizations). It is noted that it is not necessary to be completely out of phase with the two beam components for this configuration two work (in general, it may be sufficient if the two beam components are modulated out of phase (or not modulated with the same phase, i.e. when there is some phase difference).

Both Fig. 8b) and 8c) may allow for a small AC-Stark shift since the field of the $\mathrm{TEM}_{10}$ is zero at the position of the ion and. A different AC-Stark shifts of the two qubit states of the addressed ion may lead to an (undesired) rotation of the state of the qubit of the addressed ion, which may thus be reduces in this way. Additionally, the configuration shown in Fig. 8c) may allow, by selecting appropriate transitions, to make the AC-Stark shift identical (or similar) on both qubit states of the addressed ion. In this way, the differential Stark shift may become small or zero, which in turn may reduce or avoid rotation of the qubit state of the ion.

The present approach using multiple beam components with a different shape may be combined with the SDF modulation that uses multi-chromatic light. For instance, the intensity gradient resulting from the overlap of two beam components can e.g. be modulated by inducing a frequency difference (corresponding to the motional mode frequency plus a detuning) between the two beam components, as discussed below.

Hermite-Gaussian (including Gaussian beams) as well as Laguerre-Gaussian beams may e.g. be generated/formed using Spatial-Light-Modulators (SLMs) and/or phase plates, which may be included in the optical elements 350 of the laser beam unit 320. However, the present invention is not limited to any beam shapes. For instance, the beam form may also have a constant gradient in the direction radial/transverse to the propagation direction, which may reduce the dependency of the SDF on the exact position of the illuminated ion in the laser beam which may simplify the technical implementation.

**State-Dependence of SDF**

The term **"state-dependent force"** (SDF) refers, as usual in the context of trapped ions, to a force that depends on the internal state of the trapped ion on which said SDF acts, e.g. a spin-dependent force. More specifically, the SDF induced by the laser beam depends on the state of the qubit represented by the ion. In other words, the SDF differs for the two qubit states of the addressed ion. More specifically, the SDF induced by a laser beam may act differently on a trapped ion when it is in the $|0\rangle$ state than when it is in the $|1\rangle$ state. As a trapped ion may be in a superposition $|\psi\rangle = \alpha|0\rangle + \beta|1\rangle$ of the $|0\rangle$ and the $|1\rangle$ state, the SDF may act simultaneously differently on the $|0\rangle$ and the $|1\rangle$ component of the trapped ion state. In other words, the SDF may be a quantum mechanical superposition of (two) forces acting respectively on the qubit states $|0\rangle$ and $|1\rangle$. For instance, the SDF may depend on the spin of the trapped ion, when the qubit states of the ion have a different spin. On the other hand, the SDF may in general be independent of i) the motional state of the trapped ions (this often holds only to first order) and ii) the internal state of other trapped ions. In general, the strength and/or the direction of the force may depend on the internal state. In particular, the SDF may have opposite directions and/or the same magnitude for the two qubit states. For instance, an SDF may be a dipole force, in particular an optical dipole force.

In general, the approach for making the forces state-depend may depend on the ions and, in particular, on the internal states of the ions that are used to represent the qubits. Usually, when implementing an LS-gate, the laser beam is used to (off-resonantly) excite a transition between a qubit state and an excited (non-qubit) state and/or to induce a dipole force (i.e. the SDF may be a dipole force). In general, unlike MS-gates, LS-gates are based on elastic photon scattering, i.e. scattering/deflection in which only the direction but not the wavelength of the photons is changed by the scattering process. Thus, the laser beam frequency is usually far-detuned from dipole transitions, i.e. transitions from the qubit states to the excited non-qubit state(s) used for the coupling.

More specifically, a time varying electric field induces a shift $E_i \rightarrow E_i + \Delta E_i$ in the energy levels $E_i$ of an atom/ion, a so-called *"AC-Stark"* or *"light shift"*. Said shift is proportional to the intensity of the laser beam as can be seen from the following result, obtained in second-order perturbation theory for non-degenerate energy Eigenstates $|i\rangle$, $|j\rangle$ of the ion,

$$\Delta E_i = \sum_{j \neq i} \frac{|\langle j | H_1 | i \rangle|^2}{\hbar \omega_L - E_i + E_j}$$

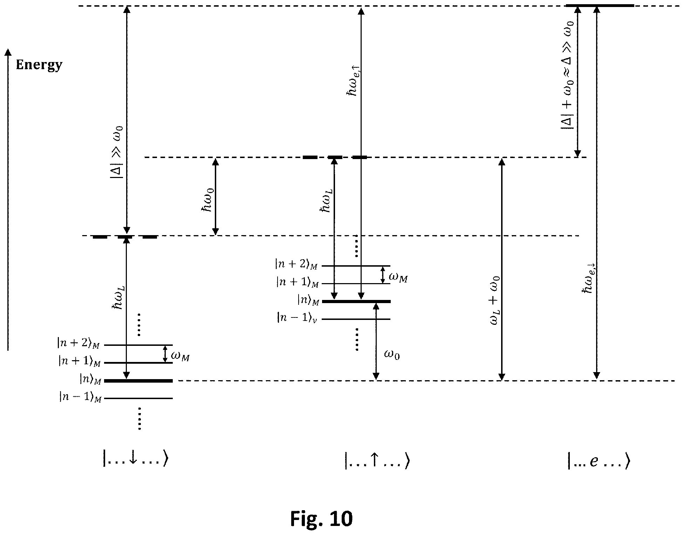

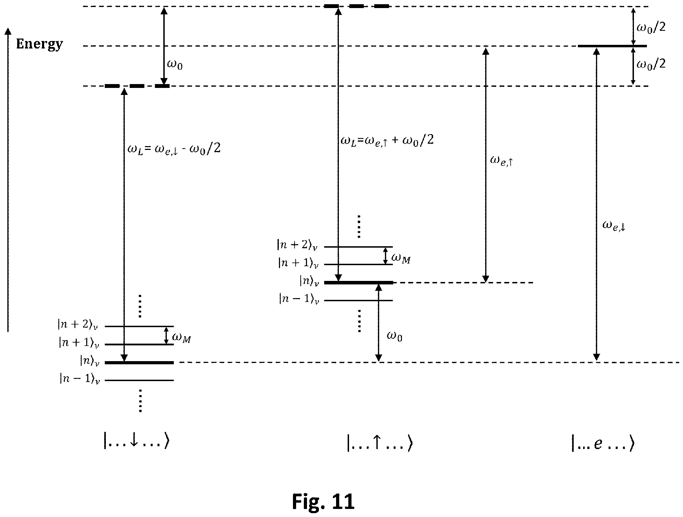

since the interaction Hamiltonian $H_1$ induced by the laser beam with frequency $\omega_L$ is proportional to the electric field of the beam, and the energies on the right hand side of the equation are the unperturbed energies. As can be seen from the above formula, the energy shifts dependent on the state of the ion. In general, the resulting dipole force can thus be made state-dependent by adjusting/modulating the polarization of the laser beam appropriately and/or selecting specific excited states of the ion from which the laser frequency is detuned. More specifically, in general the laser frequency $\omega_L$ of the laser beam may be detuned from a transition frequency ($\omega_{e,\downarrow} = \omega_e - \omega_\downarrow$ or $\omega_{e,\uparrow} = \omega_e - \omega_\uparrow$, cf. Figs. 10 and 11) between a qubit state and an excited state by a detuning $\Delta$ (e.g. $\Delta = \omega_L - \omega_{e,\downarrow}$).

Here it is noted that, the term *"detuning"* in general refers to a frequency difference/shift of a frequency of the laser with respect to a frequency of the quantum system. In case of the detuning discussed here, the laser frequency is the electromagnetic field oscillation frequency $\omega_L$ and the frequency of the quantum system is the frequency (corresponding to the energy difference) of a transition from a qubit state to an excited (non-qubit) state. However, as further explained below, the term detuning is also used for the frequency difference $\delta$ between the frequency $\omega_{Mod}$ with which the laser beam is modulated and the frequency of a motional mode $\omega_M$. The term thus generally refers to difference of a frequency of the laser with respect to some (resonant) frequency given by the trapped ion system. A laser frequency below the frequency of the quantum system are called red-detuned, and lasers tuned above the frequency of the quantum system frequency are called blue-detuned. In general, a detuning is considered in some sense to be small. In particular, the detuning with respect to the frequency from which the laser is detuned is smaller than the frequency difference of the laser with respect to most or all other frequencies.

Due to the denominator in the above formula, the detuning from specific frequencies thus implies that the corresponding transitions dominate the energy shifts of the qubit states. The energy shifts and the dipole force may then be determined, in an approximation, based on the transition(s) with respect to the excited state(s), selected with the detuning. Since the energy shifts are proportional to the intensity of the laser beam (the interaction Hamiltonian $H_1$ is proportional to the size of electric field), a spatially-varying intensity corresponds to a potential energy field, the so-called dipole potential. Consequently the resulting (electric) dipole force acting on an ion is proportional to the intensity gradient of the electric field. Furthermore, since the interaction Hamiltonian $H_1$ may depend on the polarization properties of the laser beams, the matrix elements $\langle j | H_1 | i \rangle$ may for given states $|i\rangle$ and $\langle j|$ depend on the polarization properties of the laser beam, which may be used to implement an SDF based on a polarization/phase gradient of the laser beam.

A first example of such a technique is illustrated in **Fig. 10.** The frequency difference between the qubit states $|\downarrow\rangle$ and $|\uparrow\rangle$ of the addressed qubit is denoted as $\omega_0$, the frequency of the laser beam directed to the addressed ion is denoted as $\omega_L$, and the frequency of the used motional mode is denoted as $\omega_M$. As illustrated in Fig. 10, an excited state $|e\rangle$ (i.e. an internal state of the addressed ion that is different from the qubit states) is used to implement a coupling. More specifically, the frequency $\omega_L$ of the electromagnetic field oscillation that induces the SDF is detuned from both transition frequencies $\omega_{e,\downarrow}$ and $\omega_{e,\uparrow}$, where $\omega_{e,\downarrow}$ is the frequency difference between the $|\downarrow\rangle$ and the excited state $|e\rangle$, and $\omega_{e,\uparrow}$ is the frequency difference between the $|\uparrow\rangle$ and the excited state $|e\rangle$ (thus, $\omega_{e,\uparrow} = \omega_{e,\uparrow} + \omega_0$). In Fig. 10, the detuning with respect to the transition from the $|\downarrow\rangle$ to $|e\rangle$ is denoted as $\Delta$, i.e. $\omega_L = \omega_{e,\downarrow} + \Delta$. It is noted that Fig. 10 shows a negative detuning $\Delta < 0$. Usually, in this example, the detuning is chosen to be large in comparison to the energy difference between the qubit states $|\Delta| \gg \omega_0$, but still small enough that other excited states can still be neglected (e.g. the detuning to other excited states should remain much larger than the detuning to the selected excited state $|e\rangle$). This

makes the detuning for the transitions from both qubit states approximately equal. Usually, an excited state $|e\rangle$ is selected for which the transitions from the qubit states to the excited state are electric-dipole transitions. The dependence of the dipole force on the qubit states may be achieved by a suitable adjustment/setting and/or modulation of the polarization components of the laser beam. For instance, using a $^9Be^+$ ion, the hyperfine ground states could be used as the qubit states, i.e. $|\downarrow\rangle = |S_{1/2}(F = 2, m_F = -2)\rangle$ and $|\uparrow\rangle = |S_{1/2}(F = 1, m_F = -1)\rangle$, and the $^2P_{1/2}$ and/or $^2P_{3/2}$ states could be used as the excited state(s).

A second example of this technique is illustrated in **Fig. 11,** which differs from the previous example in that the frequency $\omega_L$ of the laser beam is symmetrically detuned from the two transition to the excited state. More specifically, the laser frequency is red-detuned (or negatively detuned, i.e. $\omega_L < \omega_{e,\downarrow}$) with respect to the transition from the $|\downarrow\rangle$ state to the excited state $|e\rangle$, i.e. $\omega_L = \omega_{e,\downarrow} - \omega_0/2$, and blue-detuned (or positively detuned, $\omega_L > \omega_{e,\downarrow}$) with respect to the transition from the $|\uparrow\rangle$ state to the excited state $|e\rangle$, $\omega_L = \omega_{e,\uparrow} + \omega_0/2$. Such detuning (one red, the other blue) leads to an SDF that acts for the two qubit states in opposite directions. Since the detuning is exemplarily assumed to be symmetric, the SDF would have the same magnitude (absolute size) for both qubit states. This technique may be used even when the induced Stark shift is, in the limit of a large detuning $|\Delta| \gg \omega_0$ state-independent, e.g. when the energy splitting of the qubit states is in first-order independent of the changes in the magnetic field (e.g. qubit states with the same magnetic quantum number $m_F$, so-called clock states). For instance, using a $^{43}Ca^+$ ion, $|\downarrow\rangle = |S_{1/2}(F = 4, m_F = 0)\rangle$ and $|\uparrow\rangle = |S_{1/2}(F = 3, m_F = 0)\rangle$ could be used as the qubit states, and $|e\rangle = |D_{5/2}\rangle$ could be used as the excited state.

*Specific example for Optical Qubit(s)*

The above first and second examples of this technique also apply to optical transition qubits, such as $D_{5/2}$ $^{40}Ca^+$, $^{88}Sr^+$, $^{138}Ba^+$, and $^{226}Ra^+$. For instance, as a specific example for an optical qubit, the qubit may be encoded into an $^{40}Ca^+$ according to $|\downarrow\rangle = |S_{1/2}(m_j = +1/2)\rangle$ and $|\uparrow\rangle = |D_{5/2}(m_j = +3/2)\rangle$.

For a laser beam with a wavelength of 532nm, the dominant contributions to the Stark shift are then:

(i) for the $|\downarrow\rangle$ state, due to two dipole transitions $|\downarrow\rangle \rightarrow |e_1\rangle$ and $|\downarrow\rangle \rightarrow |e_2\rangle$ with wavelengths of 393nm and 397nm, respectively. In other words, the energy difference between the excited state $|e_1\rangle$ and the $|\downarrow\rangle$ state is $\hbar\omega_{e1,\downarrow} = hc/(393nm)$, and the energy difference between the excited state $|e_2\rangle$ and the $|\downarrow\rangle$ state is $\hbar\omega_{e2,\downarrow} = hc/(397nm)$.
(ii) for the $|\uparrow\rangle$, state due to one dipole transition $|\uparrow\rangle \rightarrow |e_3\rangle$ with a wavelength of 854nm. In other words, the energy difference between the excited state $|e_3\rangle$ and the $|\uparrow\rangle$ state is $\hbar\omega_{e3,\uparrow} = hc/(854nm)$.

The frequency of the laser beam $f_L = 2\pi\omega_L = c/(532nm)$ (in general, "$\omega$" to an angular frequency and the symbol "f" refers to the corresponding ordinary frequency, which are related by $\omega = 2\pi f$),
is thus detuned from

- the $|e_1\rangle$ transition by

$$\Delta f_1 = 2\pi\big(\omega_L - \omega_{e1,\downarrow}\big) = c/(532nm) - c/(393nm) \approx -200\,\text{THz}$$

- the $|e_2\rangle$ transition by

$$\Delta f_2 = 2\pi\big(\omega_L - \omega_{e2,\downarrow}\big) = c/(532nm) - c/(397nm) \approx -192\,\text{THz}$$

- the $|e_3\rangle$ transition by

$$\Delta f_3 = 2\pi\big(\omega_L - \omega_{e3,\downarrow}\big) = c/(532nm) - c/(854nm) \approx 212\,\text{THz}.$$

In this example, due to these large detunings, the transitions are not sensitive to the polarization of the laser beam, and one may e.g. use a linear polarized laser beam.

It is noted that selecting an excited state $|e\rangle$ with a large frequency difference to the qubit states, leads to a large laser frequency $\omega_L$, corresponding to a large momentum transfer or photons with small wavelengths (e.g. 200-2000nm). This may facilitate fast entangling gates in comparison to the case when electromagnetic radiation at longer wavelengths is used.

More details on the above example techniques can be found in [1] and [2] (first example), [3] (second example), and [4] (third example). Finally, is noted that more than one excited state may be used to induce a state-dependent (dipole) force. In particular, there may be a plurality of excited states close to each other in energy, which thus all contribute substantially to the dipole force. In general, the present invention is not limited to a particular scheme to induce the SDFs.

## *Modulation of SDF*

In general, the geometric phase-gates implemented here, enable a coupling between internal qubit states via external motional states by applying electromagnetic fields (e.g. by means of appropriate laser beam/pulse). That is, the qubits are stored in internal states of respective ions, and the motional degrees of freedom may be exploited as a *"quantum bus"* for entangling the internal qubit degrees of freedom. The laser beams, inducing the SDFs on the addressed ions, couple/excite the used motional mode in a state-dependent way. The present invention differs from established implementations of MS and LS gates in particular in the way the SDFs are generated as well as the direction of the SDF (or at least a component) with respect to the (single) laser beam generating it.

As further explained in detail below, the (quantum) harmonic oscillator of a (one or more) normal mode, corresponding to a collective quantized motion of the Coulomb-coupled ion crystal, is used to process and transfer quantum information. In general, a (e.g. one) particular motional mode may be selected and used for implementing the entangling operation of the qubit states of two or more trapped ions. For the sake of simplicity, this case of using a single motional mode is explicitly discussed, but the present invention is not limited thereto and the entanglement may be conveyed using a plurality of motional modes. The frequency of this employed mode or *"used motional mode"* is denoted as $\omega_M$ and the subscript when referring to the used motional mode will be frequently dropped (i.e. ln) rather than $|n\rangle_M$). The other or most other motional modes may usually be neglected e.g. by choosing appropriate laser frequency $\omega_L$ and/or modulation frequency $\omega_{Mod}$ that do not excite the other motional modes. However, in larger ion crystals, it may be difficult to use (excite/de-excite) only one mode. It is further noted that the used motional mode may be any of the modes of the ions, in particular it is also possible to couple to a motional mode that is in the propagation direction of the laser beam, e.g. by directing the laser beams to the ions such that the addressed ion are not in the focus of the laser beams.

In general, a motional mode of the trapped ions can be used to entangle the state of two or more qubits by modulating (e.g. periodically changing) the SDF in accordance with the frequency of said motional mode to excite said mode off-resonantly. The SDF may be modulated by (periodically) changing the intensity/phase/polarization gradients at the locations of the addressed ions. This approach, further explained below, is also known as light-shift (LS) gate on which further information can be found in [1] to [4].

## *Displacement of Harmonic Oscillator and Geometric Phase*

LS-gates are based on a coherent displacement, in phase-space, of the harmonic oscillator of the used mode. The displacements is induced by SDFs, which depends on the state of the qubits. More specifically, it can be shown, that the state of a quantum harmonic oscillator can be coherently displaced in phase-space (i.e. the position-momentum space of the oscillator) by acting on it with a classical force F(t) = $F_0$ sin($\omega_{Mod}t - \varphi_{Mod}$) that is resonant with the oscillator, i.e. when the frequency $\omega_{Mod}$ is the frequency of the quantum harmonic oscillator $\omega_M$. It is noted that the modulation frequency $\omega_{Mod}$ does not refer to a frequency of the light of a laser beam (i.e. not to the electromagnetic field oscillation frequency $\omega_L$), but rather a frequency with which the SDFs are modulated. If such a force acts for a time T, it implements the action of the displacement operator $D(\alpha) = \exp(\alpha\hat{a}^\dagger - \alpha^\star\hat{a})$ on the oscillator, where $\hat{a}^\dagger$ and $\hat{a}$ denote the creation and annihilation operator of the harmonic oscillator, respectively; $\alpha = \left[\Delta q + \frac{i\Delta p}{m_M\omega_M}\right]/(2q_0) = -\frac{F_0 q_0}{2\hbar}\exp(i\varphi_{Mod})T$ ;

$m_M$ is the mass of the oscillator; and $q_0 = \sqrt{\hbar/(2m_M\omega_M)}$ , and $\Delta q$ and $\Delta p$ are the displacement in position and momentum direction, respectively.

Multiple sequential displacements may be performed to transport the harmonic oscillator in a closed path to its original state (i.e. the total/accumulated displacement due to the displacements is zero). Such path/trajectory, which may e.g. be a circle or a polygon, is here also be referred to as loop. If the state is transported in phase-space to its original position, the acquired geometric phase $\phi$ is equal to $A/\hbar$, where A is the enclosed area in phase-space. In other words, the mode is excited and de-excited (or vice versa). Furthermore, the circumstance that the harmonic oscillator is at its original position in phase-space implies disentanglement of the qubit states from the motional degrees of freedom, which are usually entangled at other positions of the trajectory (e.g. the spin-motion entanglement may be zero again). The laser parameters (intensity, polarization, frequency, interaction time) are chosen accordingly e.g. such that the state of the qubits evolves on a closed trajectory in phase-space. This may allow the motional modes to be in a potentially unknown, e.g., a thermal, state and/or in an incoherent mixture of states, possibly entangled with environmental degrees of freedom. The acquired phase $\phi$ may depend on the interaction with the electromagnetic field such as intensity and/or the duration (gate time), and/or on properties of the ion, such as energy levels of the qubit states.

Since the SDF depends on the state of the addressed qubits, a state-dependent phase shift is acquired. In other words, the SDFs excite the used motional mode conditionally, depending on the state of all the addressed qubits. That is, the amount of excitation may depend on the qubits state and/or whether or not the mode is excited at all may depend on the qubits state. Exploiting this conditional excitation, the state-dependence of the force may be used to implement an entangling operation on the ions.

As an example for this, **Fig. 12** illustrates how the axial center of mass (COM) mode, in which all ions (also not addressed ions) oscillate together with constant separation between them, may be conditionally excited. In Fig. 12 and as illustrated in the three-dimensional view in Fig. 12e), the ions are assumed to be aligned on a line in y-direction, which thus is the axial ion direction. The propagation directions of the laser beams are both assumed to be in the z-direction, which is thus the beam direction for both beams. Figs. 10a) to 10d) show xy-cuts at z=0 and illustrate respectively how the SDFs induced by the laser beams act on the $|00\rangle$, the $|01\rangle$, the $|10\rangle$, and the $|11\rangle$ state. For both laser beams, it is assumed that i) the directions of the induced SDF is for the $|0\rangle$ state towards the center of the respective laser beam, and ii) for the $|1\rangle$ state away the directions from the center of the respective laser beam. The SDFs are thus in opposite directions for the two qubit states. For instance, the laser beams may have a Gaussian beam profile, with the highest intensity at the beam axis. The gradients of the intensity may thus points to the centers of the laser beams, and the force on the $|0\rangle$ may be in direction of the gradient, whereas the force on the $|1\rangle$ may be in opposite direction to the gradient. For instance, the $|0\rangle$ and the $|1\rangle$ state may have respectively a negative and positive energy shift (cf. the AC/light shift discussed above) to their energy levels due to the laser beams.

More specifically, as can be seen, the first addressed ion 381 sits on the right side of the beam axis of the first laser beam, whereas the second addressed ion 382 sits on the left side of the beam axis in its laser beam. In consequence, as shown in **Fig. 12a),** the direction 1201 of the SDF acting on the first addressed ion in the $|0\rangle$ state is opposite to the direction 1202 of the SDF acting on the second addressed ion in the $|0\rangle$ state, the forces cancel for the $|00\rangle$ state, and the COM mode is not excited when the addressed qubits are in the $|00\rangle$ state. This implies that the laser beams do not change the $|00\rangle$ state, i.e. $|00\rangle \rightarrow |00\rangle$ is performed by applying the laser beams over the gate time. Furthermore, as shown in **Fig. 12b),** the direction 1201 of the SDF acting on the first addressed ion in the $|0\rangle$ state is in the same direction as the direction 1212 of the SDF acting on the second addressed ion in the $|1\rangle$ state. Thus, the COM mode is excited when the addressed qubits are in the $|01\rangle$ state. The $|01\rangle$ state thus acquires a phase $\phi$ from the interaction with the laser beams, i.e. $|01\rangle \rightarrow e^{i\phi}|01\rangle$ by applying the laser beams over the gate time. Similarly, as illustrated in **Fig. 12c),** the SDF acts in the same direction when the qubits are in the $|10\rangle$ state, which thus also acquires the phase $\phi$, i.e. $|10\rangle \rightarrow e^{i\phi}|10\rangle$. Finally, as shown in **Fig. 12d),** the direction 1211 of the SDF acting on the first addressed ion in the $|1\rangle$ state is opposite to the direction 1212 of the SDF acting on the second addressed ion in the $|01\rangle$ state. Thus, the forces cancel for the $|11\rangle$ state, and the COM mode is not excited when the addressed qubits are in the $|1\rangle$ state, i.e. $|11\rangle \rightarrow |11\rangle$.

As illustrated in Fig. 12, an LS-gate may generally be used to implemented the unitary operator (in the $\{|00\rangle, |01\rangle, |10\rangle, |11\rangle\}$) basis)

$$
\mathrm{LS}(\phi) = \begin{bmatrix} 1 & 0 & 0 & 0 \\ 0 & e^{i\phi} & 0 & 0 \\ 0 & 0 & e^{i\phi} & 0 \\ 0 & 0 & 0 & 1 \end{bmatrix}
$$

or more explicitly $|00\rangle \rightarrow |00\rangle$, $|01\rangle \rightarrow e^{i\phi}|01\rangle$, $|10\rangle \rightarrow e^{i\phi}|10\rangle$, and $|11\rangle \rightarrow |11\rangle$. For a phase shift of $\phi = \pi/2$, the evolution of the wave function of the two addressed ions due to an LS-gate may thus be summarized as:

$$
|0\rangle|0\rangle \rightarrow |0\rangle|0\rangle
$$

$$
|0\rangle|1\rangle \rightarrow e^{i\pi/2}|0\rangle|1\rangle
$$

$$
|1\rangle|0\rangle \rightarrow e^{i\pi/2}|1\rangle|0\rangle
$$

$$
|1\rangle|1\rangle \rightarrow |1\rangle|1\rangle = e^{-i\pi}\left(e^{i\pi/2}|1\rangle\right)\left(e^{i\pi/2}|1\rangle\right)
$$

Such an LS-gate is equivalent to a universal controlled $\pi$-phase gate, which induces a phase shift on one basis-state of the target qubit (here on the $|1\rangle$ state), depending on the state of the control qubit (here if the control qubit is in the $|1\rangle$ state; it is identical irrespective which qubit is considered the target and which is considered the control qubit) according to

$$\text{CPhase}(\pm\pi) = \begin{bmatrix} 1 & 0 & 0 & 0 \\ 0 & 1 & 0 & 0 \\ 0 & 0 & 1 & 0 \\ 0 & 0 & 0 & e^{\pm i\pi} \end{bmatrix} = \begin{bmatrix} 1 & 0 & 0 & 0 \\ 0 & 1 & 0 & 0 \\ 0 & 0 & 1 & 0 \\ 0 & 0 & 0 & -1 \end{bmatrix}$$

plus $\pi/2$ individual single-qubit phase shifts $P(\pi/2) = \begin{bmatrix} 1 & 0 \\ 0 & e^{i\pi/2} \end{bmatrix}$ on the $|1\rangle$ states of both ions, which may be summarized as

$$P(\pi/2) = \begin{bmatrix} 1 & 0 & 0 & 0 \\ 0 & e^{i\pi/2} & 0 & 0 \\ 0 & 0 & e^{i\pi/2} & 0 \\ 0 & 0 & 0 & e^{2i\pi/2} \end{bmatrix} = \begin{bmatrix} 1 & 0 & 0 & 0 \\ 0 & i & 0 & 0 \\ 0 & 0 & i & 0 \\ 0 & 0 & 0 & -1 \end{bmatrix}.$$

For instance, by initializing e.g. in the (completely unentangled) $|00\rangle$ state and performing single-qubit operations on each of the qubits, the (still completely unentangled) state $(|0\rangle + |1\rangle) \otimes (|0\rangle + |1\rangle)/2 = (|00\rangle + |11\rangle + |01\rangle + |10\rangle)/2$ can be obtained. The above LS-gate with $\phi = \pi/2$ than changes this state to the maximally entangled state $(|00\rangle + |11\rangle + i|01\rangle + i|10\rangle)/2$.

*Gate Time T*

It is noted that the modulation (i.e. step S220) of the SDFs is performed while the SDFs are induced on the ions. In other words, the laser beams exert modulated SDFs on the ions for the gate time. Modulation refers to a change over time of the respective quantity.

More specifically, the terms **"gate time"** T or *"gate duration" T* refer to a time/duration for which the laser beam(s) are modulated and (at the same time) illuminating the addressed ions. Thus, the gate time may be the duration the SDFs are applied/induced and modulated, i.e. may be the time length the SDFs are interacting with the ions. In particular, the laser beams may be laser pulses with the duration of the gate time. The amplitude of the laser pulse/beams outside the gate time may be zero or the laser beams may not illuminate the addressed ions outside the gate time.

In general, the gate time may be predetermined, i.e. the gate time may be a predetermined time/duration. In particular, the gate time may be determined such that the qubits are completely disentangled from the state of the harmonic oscillator of the used motional mode after the gate time. More specifically, the internal degrees of freedom used for representing the addressed qubits are disentangled from the motional degrees of freedom of the state of the qubits. For instance, after the gate time, the wave function of the addressed ions may be in its original motional state (i.e. the initial state at the beginning of the gate time).

More specifically, after the modulation over the gate time: (i) internal states (e.g. the qubit states) of the addressed ions may not be entangled with a state of the motional mode, and/or (ii) a total (accumulated) displacement in a position-momentum space of the harmonic oscillator of the used motional mode may be zero, the total displacement being a total displacement due to the modulation of the SDFs over the gate time.

For instance, a cost function that depends on the gate time and the gate fidelity (i.e. the fidelity of the performed entangling operation) may be minimized when (pre-) determining the gate time. More specifically, a shorter gate time may reduce the impact of phase instabilities of the involved laser on the fidelity of the gate. A short gate time also has the advantage of a faster quantum computation, which may be of particular importance when extended quantum computations, involving many successive gate operations, are to be performed. However, the gate time usually also depends on the strength of the SDFs and thus the intensities of the laser beams, which when arbitrarily increased may lead to instabilities, technical difficulties, and thus to a reduction of the fidelity.

*Periodic Modulation and detuning $\delta$*

In general a closed path in the phase-space of the harmonic oscillator may be implemented by (slowly) changing

the phase $\varphi_{Mod}$ and/or the modulation frequency $\omega_{Mod}$ modulating the classical force F(t) = $F_0$ sin($\omega_{Mod}t$ - $\varphi_{Mod}$). In other words, a time-dependent phase $\varphi_{Mod}(t)$ and/or time-dependent modulation frequency $\omega_{Mod}(t)$ may be used.

For instance, the SDFs may be modulated, for the gate time, with a modulation frequency $\omega_{Mod} = \omega_M + \delta$. Regarding this, it is noted that the (usually small) detuning $\delta$ of the modulation frequency $\omega_{Mod}$ from the frequency $\omega_M$ corresponds to a (usually slow) constant change of the phase $\varphi_{Mod}$. That is, F(t) = $F_0$ sin($\omega_{Mod}t$ - $\varphi_{Mod}$), with $\omega_{Mod} = \omega_M + \delta$ and $\varphi_{Mod}$ time-independent, may also be written as F(t) = $F_0$ sin($\omega_M t$ - $\varphi_{Mod}(t)$), with $\varphi_{Mod}(t) = \varphi_{Mod}(0) + \delta t$). Such detuning, also referred to as periodic modulation, usually leads to circle in phase-space. However, the present invention is not limited to the closed path being a circle. In general, any closed path may be used for implementing the entangling gate (e.g. the closed path may be an ellipsis, and $\varphi_{Mod}(t)$ may not be a linear function).

When the oscillator is periodically driven through a circular trajectory in phase-space (i.e., $\omega_{Mod} = \omega_M + \delta$), the driving force is asynchronous with the frequency $\omega_M$ of used mode due to the detuning $\delta$, but re-synchronizes after a duration $2\pi/\delta$. The detuning $\delta$ thus determines how fast the rotation in the phase-space of the oscillator is performed. Thus, a smaller detuning parameter $\delta$ may allow to may increase the gate speed. Over a time of duration $2\pi/\delta$, the state of motion is displaced along a circular path in phase-space returning to the original point in phase space after time $2\pi/\delta$ while acquiring a geometric phase equal to the enclosed phase space area, which may be determined according to (cf. [2])

$$\phi_0 = 2\pi \left| \frac{F_0 q_0}{\hbar\delta} \right|^2$$

where $q_0 = \sqrt{\hbar/(2m_M\omega_M)}$ , and $m_M$ refers to the mass of the quantum mechanical oscillator of the used motional mode (i.e., $m_M$ is not the mass of a single ion).

In general, the loop may be traversed multiple times. More specifically, the gate time may be given as T = $2\pi n/\delta$, wherein n is an integer greater than zero and $\delta$ is the detuning from the frequency $\omega_M$ of the used motional mode. By choosing the intensity of the laser beams (the dipole force being proportional to the intensity) and the detuning $\delta$, for example, a $\pi/2$-phase shift may be acquired for specific states of the addressed qubits over the gate time T, as in the example above.

In general, a larger detuning $\delta$ may lead reduce the time after which the oscillator is in its original state. This may also allow for a shorter gate time (i.e. a faster gate), as the gate time is an integer-multiple of the time required for performing one closed path in phase-space. More specifically, the harmonic oscillator may be driven through a plurality of loops/cycles which allows accumulating the state-dependent geometric phase from all cycles in order to implement a specific quantum gate. However, a too large detuning $\delta$ may lead to the coupling to other motional modes, which may not be desirable. Thus, the detuning $\delta$ may in general be chosen to be small compared to the used motional mode and/or small in comparison to the frequency difference between the used mode and (any) other motional mode.

In general, the frequency $\delta$ may be determined (e.g. predetermined before the entanglement operation is performed) by optimizing a trade-off between the gate time and a gate fidelity (or a trade-off between the gate time and a gate error), usually subject to the constraint that the qubit states are not entangled with the motional degrees of freedom after the gate time T=$2\pi n/\delta$ and/or that the total acquired phase $\phi = n\phi_0$ acquired over the gate time T has a specific/predetermined value, given by the quantum gate to be implemented. This determination may thus include determining a suitable integer $n$, corresponding to the number of phase-space cycles, on which the gate time also depends. Furthermore, the term "gate fidelity" refers to the fidelity of the entangling operation performed on the addressed ions by the laser beams. In general, it is a measure how well the intended unitary operation on the qubits is actually achieved by a physical implementation. As can be seen from the above formula for the acquired phase, a larger force and thus a larger laser beam intensity allows for a faster gate, but too large beam intensities may reduce the fidelity.

Furthermore, a large detuning $\delta$ implies a shorter gate time and a larger excursion in phase space. This may lead to larger increase of the size of the wave packet of the ion and, in turn, may lead to a breakdown of the Lamb-Dicke approximation, which is based on a small wave-packet size in comparison to the laser wave length; i.e. the coupling of the light field to the motion of the ion is no longer to a good approximation linear. This as well as other considerations may put further constraints or trade-offs on the choice/determination of $\delta$.

### Methods of SDF modulation

The SDFs may be modulated by modulating the transverse gradients, inducing the SDFs, of the laser beams at the positions of the respective addressed ions. The SDFs acting on all addressed ions, in particular all transvers gradients at the positions of the addressed ions, may be modulated in the same way (e.g. with a same frequency and the same phase). In particular, the gradients may be modulated directly/actively at a frequency (or frequencies) close to one or more motional modes. This allows not using a standing wave for the modulation and to use just one laser beam from one direction. In particular, an (one, each, or all) SDF induced by a laser beam may be modulated, at the position of an ion, addressed by said laser beam, by

1) modulating the intensity and/or the amplitude of the electromagnetic field of the laser beam,
2) changing the position and/or the direction of the laser beam relative to the trapped ion,
3) including light of different frequencies into the laser beam, and/or
4) modulating the polarization and/or phase of the laser beam.

It is noted that each of the methods 1) to 4) modulates the SDF at the location of the respective trapped ion by modulating the gradient of the laser beam at said location. It is noted that the present invention is not limited to any of these methods and, furthermore, that these methods may be combined by modulating the SDF with two or more of these methods at the same time. Furthermore, in general the SDFs acting on different ions may be modulated with the same modulation method(s) or with different modulations method(s).

### *Method 1) - Intensity and/or Amplitude Modulation*

In general, the modulation of the intensity/phase/polarization gradient can be achieved by modulating the intensity of the laser beam. For instance, the frequency, phase and/or amplitude of the individual beams can be modulated with one or more AOMs and/or one or more AODs, for instance with AOMs in a double-pass configuration. In Fig. 6, for instance, the amplitude and/or phase modulation could be implemented with the AOD 620 and/or the AOD 640. Alternatively or in addition, the modulation of the laser beams could be implemented in Fig. 6 with AOMs (not shown in Fig. 6) that are e.g. positioned before the first AOD 620.

However, the present disclosure is not limited to any particular method of modulating e.g. the intensity. The modulated laser beam may then have a modulated gradient that induces a modulated SDF acting on the addressed ion. For instance, when two ions are addressed with two respective laser beams (e.g. as in Fig. 12), the electromagnetic fields $\vec{E}_{L1}(r, z, t)$ and $\vec{E}_{L2}(r, z, t)$ of the first and second laser beam may be modulated according to

$$\vec{E}_{L1}(r,z,t) = \vec{E}_1(r,z) \cdot \cos(\omega_{Mod} \cdot t/2 + \varphi_{Mod1}/2) \cdot \cos(kz - \omega_{L1} \cdot t - \varphi_{L1})$$

$$\vec{E}_{L2}(r,z,t) = \vec{E}_2(r,z) \cdot \cos(\omega_{Mod} \cdot t/2 + \varphi_{Mod2}/2) \cdot \cos(kz - \omega_{L2} \cdot t - \varphi_{L2})$$

where z is a space coordinate in the direction of the laser beam, i.e. in the direction of the beam axis, and r refers to the radial distance from the respective beam axis (in the present example, the beam thus has a radial symmetry). $\vec{E}_1(r, z)$ and $\vec{E}_2(r, z)$ define the shape and/or polarization of the respective laser beam. For instance, in complex notation, $\vec{E}_1(r,$
$z) = \vec{\varepsilon}_1 e^{-r^2/(w_1(z))^2} e^{ik_1 r^2/(2R_1(z))}$ ($\vec{E}_2(r,z)$ may be analogously defined), where $\vec{\varepsilon}_1$ is the polarization vector, $k_1$
is the wave number (i.e. the magnitude of the respective wave vector $\vec{k}_1$), $e^{-r^2/(w_1(z))^2}$ corresponds to a Gaussian beam profile, and $R_1(z)$ is the radius of curvature of the first laser beam's wave front at position z in the beam direction.
As explained above, the dipole forces $\vec{F}_{Dip1}$ is proportional to the gradient of the laser beam intensity, i.e.,

$$\vec{F}_{Dip1} \propto \vec{\nabla}\left|\vec{E}_{L1}(r,z,t)\right|^2 \approx \frac{1}{2}\left|\cos(\omega_{Mod} \cdot t/2 + \varphi_{Mod}/2)\right|^2 \cdot \vec{\nabla}\left(\vec{E}_1(r,z)\right)^2 = \frac{1}{4}\Big(1 + \cos(\omega_{Mod} \cdot t + \Big)$$

$\varphi_{Mod})\vec{\nabla}(\vec{E}_1(r, z))^2$, where in the second step it has been averaged over the fast oscillating term $\omega_{L1} \gg \omega_{Mod}$. In other words, the above modulation with frequency $\omega_{Mod}/2$ of the fields $\vec{E}_{L1}$ and $\vec{E}_{L2}$ result in modulation of the force with frequency $\omega_{Mod}$. It is noted that, in general, we may have $\omega_{L1} \neq \omega_{L2}$, $\varphi_{L1} \neq \varphi_{L2}$, and/or $\varphi_{Mod1} \neq \varphi_{Mod2}$.

### *Method 2) - Modulation via Change of Position and/or Direction of laser beam*

In general, the modulation of the intensity/phase/polarization gradient can be achieved by modulating (e.g. changing) the position of the laser beam with respect to the position of the ion. For instance, the laser beam may have a non-constant gradient in a radial beam direction and/or may depend, as in the case of a Gaussian beam, on the radial distance from the beam axis $r = \sqrt{x^2 + y^2}$, where $x$ and $y$ are the distances from the beams axis in two orthogonal radial beam directions.

The intensity gradient at the position of the ion may then be changed by changing the position of the ion with respect to the beam axis (i.e. by changing the x and/or the y-coordinate). As said position is a relative position with respect to the beam axis, this may be achieved by moving the laser beam axis relative to the position of the addressed ion. In this way, the intensity gradient may at the position of the addressed ion may be changed and the resulting SDF can be modulated. In particular, by changing the position of the laser beam relative to the position of an ion, the transverse gradient can be used to excite either the radial or the axial modes of motion (or both). This advantage also applies for planar crystals in 3D Paul traps or more advanced trapping topologies with surface ion traps.

*Method 3) -Modulation using a multi-chromatic Laser Beam*

In general, the modulation of the intensity/phase/polarization gradient can be achieved by including light of a plurality of different frequencies into a laser beam. In other words, the laser beam may include two or more beam components with different frequencies.

For instance, a periodically changing intensity gradient at the location of an addressed ions can be achieved by using light of two frequencies. The beat note of the two frequencies results then in an effective intensity modulation. More specifically, if a laser beam includes light with electric-field amplitude $\vec{E}_{L1}(r, z, t) = \vec{E}_0$, frequency $\omega_1$ and wave vector $\vec{k}_1$; and light with electric-field amplitude $\vec{E}_{L2}(r, z, t) = \vec{E}_0$, light with frequency $\omega_2$ and wave vector $\vec{k}_2$, the intensity of the laser beam behaves as

$$I(\vec{r}, t) \propto \left| \vec{E}(\vec{r}, t) \right|^2 = \left| \vec{E}_0 \cos\left( \vec{k}_1 \cdot \vec{r} - \omega_1 t - \varphi_1 \right) + \vec{E}_0 \cos\left( \vec{k}_2 \cdot \vec{r} - \omega_2 t - \varphi_2 \right) \right|^2$$

$$= \left| 2\vec{E}_0 \cos\left( \frac{\vec{k}_- \cdot \vec{r} - \omega_- t - \varphi_-}{2} \right) \cdot \cos\left( \frac{\vec{k}_+ \cdot \vec{r} - \omega_+ t - \varphi_+}{2} \right) \right|^2$$

$$\approx 2\vec{E}_0 \left| \cos\left( \frac{\vec{k}_- \cdot \vec{r} - \omega_- t - \varphi_-}{2} \right) \right|^2 = \vec{E}_0 \left( 1 + \cos\left( \vec{k}_- \cdot \vec{r} - \omega_- t - \varphi_- \right) \right)$$

where $\varphi_1$ and $\varphi_2$ are constant phase shifts, and the notations $\vec{k}_\pm = \vec{k}_1 \pm \vec{k}_2$, $\omega_\pm = \omega_1 \pm \omega_2$, and $\varphi_\pm = \varphi_1 \pm \varphi_2$ have been introduced. It is noted that $\omega_-$ is thus the modulation frequency with which the intensity is (effectively) modulated ($\omega_- = \omega_{Mod}$). In the last step, the second cosine has been averaged over time which may be an appropriate approximation when $\omega_1 + \omega_2 \gg \omega_{Mod}$. In the above example, for the sake of simplicity, it has been assumed that the electric field amplitudes of the different-frequency light are identical only that there are only two different frequencies, but the present modulation method is not limited thereto. For instance, the two beam components $\vec{E}_{L1}$ and $\vec{E}_{L2}$ of frequency $\omega_1$ and $\omega_2$ may have different shapes as discussed above.

The wave vectors $\vec{k}_1$ and $\vec{k}_2$ are usually almost in the same direction as this describes one laser beam. However, in practice, the two k-vectors may be slightly different e.g. as a result of the generation of the two lights from one mono-chromatic laser beam.

For instance, a splitter may be used to split the mono-chromatic laser beam to obtain two beams; shifting the frequency of at least one of the obtained laser beams using e.g. an acousto-optic modulator (AOM); and feeding the laser beams into a same fiber after the shifting (thereby obtaining the one laser beam inducing the SDF on an ion).

Alternatively, an AOM could be used to simultaneously split a mono-chromatic laser beam into multiple laser beams with different frequencies and directions (i.e. splitting and shifting in one step). In this way, mainly three laser beams may be generated: one laser beam with the same direction and frequency as the original mono-chromatic laser beam, and two laser beams of the first diffraction order. Two or more of these three laser beams could then be fed into a same fiber to obtain the multi-chromatic laser beam.

As a further possibility, an electro-optic modulator (EOM) could be used to obtain (in one step) a laser beam with two sidebands from a monochromatic laser beam.

*Method 4) - Phase and/or Polarization Modulation*

In general, the modulation of a phase/polarization can be achieved by modulating phase/polarization of the laser beam. More specifically, if the electric field of the laser beam is written as

$$\vec{E}_L(\vec{r}, t) = \vec{\varepsilon}_1(\vec{r}) E_0(\vec{r}) e^{i\varphi(\vec{r})} e^{-i\omega_L \cdot t}$$

the phase and the polarization may be modulated by making respectively $\vec{\varepsilon}_1(\vec{r})$ and $\varphi(\vec{r})$ time dependent, for instance $\varphi(\vec{r}, t) = \varphi(\vec{r}, 0) \cdot \cos(\omega_{Mod} \cdot t/2 + \varphi_{Mod}/2)$, with $\omega_{Mod} = \omega_M + \delta$ as above for the intensity modulation, which leads to a modulation of the force $\vec{F}_{phase} \propto (E_0(\vec{r}))^2 \vec{\nabla} \varphi(\vec{r})$ with frequency $\omega_{Mod}$.

*Excitation/Using different Motional Modes*

As mentioned above, using transverse SDFs may facilitate easy access to motional modes in different direction.

*Axial and/or Radial Modes*

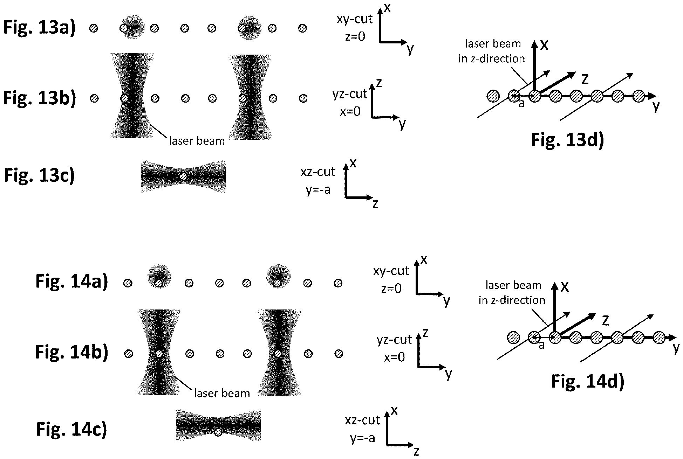

**Fig. 13** illustrates an exemplary beam geometry for entangling two ions of a linear ion chain using an axial motional mode. As illustrated in Fig. 13d), which is a reproduction of Fig. 12e), the labelling of the axis and definition of coordinate origin with respect to the laser direction and ion axis is identical as in the example of Fig. 12. Two ions are addressed with two respective Gaussian laser beams propagating in z-direction, i.e. darker areas of the laser beams indicate higher intensities of the laser beams. In order to excite an axial mode (the specific axial mode excited by the beams depends on the modulation of the SDFs, as explained above), SDFs in the axial ion direction (y-direction) are required. Since the laser beams are Gaussian, the intensity gradients used for inducing the SDFs point toward the center of the beam axis. The laser beams are therefore directed to the ions, such that the ions are displaced from the respective beam axis in the y-direction. As illustrated in Fig. 13a), which shows an xy-cut at z=0, Fig. 13b), which shows an yz-cut at x=0, and Fig. 13c), which shows an xz-cut at x=-a, in the example of Fig. 13, the displacement of both addressed ions from the beam axis (which for the left addressed ion would be at y=-a) is a negative displacement in the y-directions (the addressed ions are left of the beams axis).

**Fig. 14** illustrates an exemplary beam geometry for entangling two ions of a linear ion chain using a radial motional mode. The laser beams are directed to the ions, such that the ions are displaced from the respective beam axis in the x-direction (otherwise, as illustrated in **Fig. 14d),** the situation may be similar to Fig. 13 and/or Fig. 12). The displacement in x-direction implies that the intensity gradient at the position of the ions will be in x-direction, which is one of the radial directions with respect to the ion-axis (y-direction). Thus, the induced SDFs may be in the x-direction and motional modes in the x-direction can be excited and de-excited with the SDFs. As illustrated in Fig. 14a), which shows an xy-cut at z=0, Fig. 14b), which shows an yz-cut at x=0, and Fig. 14c), which shows an xz-cut at x=-a, in the example of Fig. 13, the displacement of both addressed ions from the beam axis (which for the left addressed ion would be at y=-a) is a negative displacement in the x-directions (the addressed ions are left of the beams axis).

In general, a plurality of mutually modes may be also be used simultaneously to entangle different pairs of ions at the same time. For instance, four SDFs may simultaneously be induced on four respective (e.g. mutually different) ions. The four SDFs may be induced using four respective laser beams.

Two of the four SDFs may be modulated in accordance with a frequency of a first motional mode, thereby exciting the first motional mode depending on the internal state of the two ions on which said two SDFs act. The other two of the four SDFs may be modulated in accordance with a frequency of a second motional mode (different then the first motional mode), thereby exciting the second motional mode depending on the internal state of the two ions on which said other two SDFs act. It is noted that the first and the second motional mode are different motional modes of all four ions. The two motional modes may in general both be axial modes, both modes may radial modes, or one may be a radial and the one may be an axial mode. More ion pair may be entangled by adding additional beams to additional ions and adjusting the laser beam parameter accordingly.

*Center-of-mass (COM) Mode and Stretch Mode*

Transverse SDFs may also facilitate to couple to different motional modes of a same direction, e.g. to different axial modes.

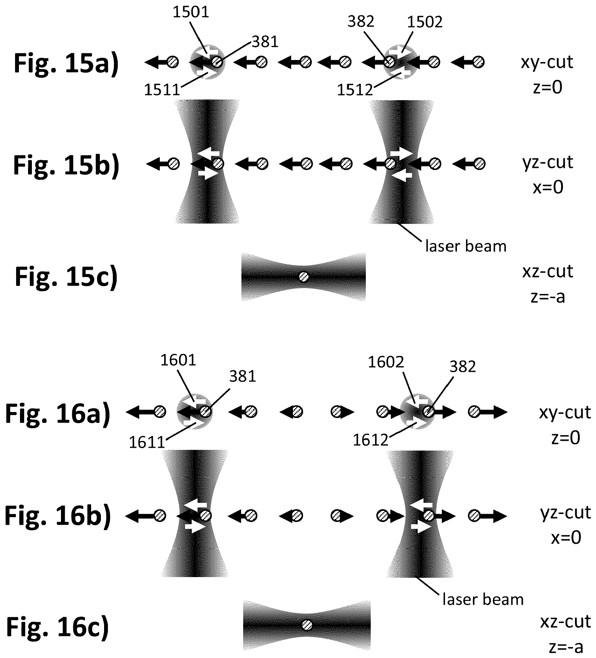

**Figs. 15** and **16** illustrates an excitation of the axial COM and the axial stretch mode, respectively, using e.g. a similar beam geometry as explained with respect to Fig. 13. However, the situation of Fig. 15 differs from Fig. 13 in that the left addressed ion 381 is on the right side of the beam axis in the y-direction (similar to the situation of Fig. 13, the right addressed ion 382 is on the left side of the beam axis in the y-direction). Furthermore, the situation of Fig. 16 differs from Fig. 13 in that in Fig. 16 both addressed ions are located on the right side of the beam axis in y-direction.

More specifically, Fig. 15a) shows an xy-cut at z=0, Fig. 15b) shows an yz-cut at x=0, and Fig. 15c) shows an xz-cut at x=-a of the excitation of the axial COM mode. Likewise, Fig. 16a) shows an xy-cut at z=0, Fig. 16b) shows an yz-cut at x=0, and Fig. 16c) shows an xz-cut at x=-a of the excitation of the axial stretch mode.

The SDFs (white arrows) of Fig. 15 are modulated close to a COM mode frequency, such that modes other than the axial COM are not excited; and the SDFs of Fig. 16 are modulated close to an axial stretch mode frequency, such that modes other than axial stretch mode are not excited. In both figures, the two addressed ions accumulates a net phase shift if the two ions are in different internal qubit states. If the two ions are in a same internal qubit state, no net phase shift is acquired.

To this end, the SDFs in Fig. 15 act in the same direction when the ions are in a different state, which excites or de-excites COM mode oscillation indicated by the black arrows in Fig. 13a) and 13b). More specifically, the force 1501, acting on the first ion when the first ion is in the $|0\rangle$ state, is in the same direction as the force 1512, acting on the second ion when the second ion is in the $|1\rangle$ state; and the force 1511, acting on the first ion when the first ion is in the $|1\rangle$ state, is in the same direction as the force 1502, acting on the second ion when the second ion is in the 10) state.

To excite or de-excite the stretch mode oscillation, as indicated in Fig. 16a) and 16b) by the black arrows, for different qubit states, the SDFs (white arrows) in Fig. 16 act in opposite directions when the ions are in different states. More specifically, the force 1601, acting on the first ion when the first ion is in the $|0\rangle$ state, is in opposite direction to the force 1612, acting on the second ion when the second ion is in the 11) state; and the force 1611, acting on the first ion when the first ion is in the $|1\rangle$ state, is in in opposite direction to the force 1602, acting on the second ion when the second ion is in the $|0\rangle$ state.

### Motional modes of Planar Ion Crystals

As already mentioned, the present invention does not only apply to linear ion strings, but may in general be applied for entangling two or more ions of any ion crystal having common/joint motional modes. In particular versatile beam steering options may be used to excite specific (freely selectable) motional modes of planar ion crystals, which may be particularly difficult with conventional methods as the optical access is further limit by the geometry of the planar ion crystal if only specific ions are to be entangled.

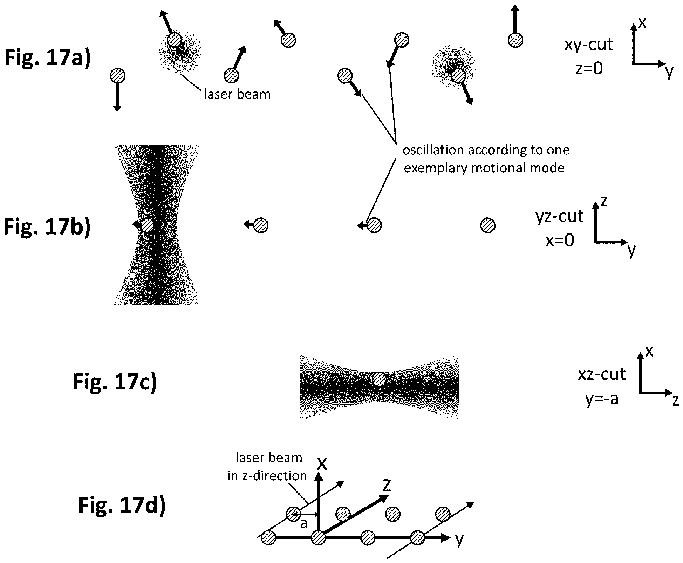

This is illustrated in **Fig. 17,** which shows motional mode of ions of an 2D ion crystal. More specifically, in Fig. 17d) that the rest/equilibrium positions of the ions are shown together with the used three-dimensional coordinate system. As can be seen, the ions are located according to a zig-zag pattern in a plane. Furthermore, Fig. 17a) shows an xy-cut at z=0, Fig. 17b) shows an yz-cut at x=0, and Fig. 17c) shows an xz-cut at x=-a of said 2D ion crystal.

As can be seen from Fig. 17 and 17b), in which the arrows indicate the direction and amplitude of oscillation of the respective ions according to a motional mode, motional modes of such an 2D ion crystal are in general not restricted to one dimension. Here, it is noted that the arrows in Fig. 17b) are projections to the zy-plane. In other words, a single motional mode may correspond to oscillation of ions in different directions with different amplitude. However, a motional modes of a planar ion crystal can be excited and used for entangling ions in the same way as a motional mode of a linear ion crystal, i.e. by directing laser beams, to the addressed ions, that are modulated with frequencies detuned from said motional mode.

### Further Aspects

The embodiments and exemplary implementations mentioned above show some non-limiting examples. It is understood that various modifications may be made without departing from the claimed subject matter. For example, modifications may be made to adapt the examples to new systems and scenarios without departing from the scope of the independent claims. Furthermore, specific pulse sequences that reduce cross-talk errors may be used in combination. Furthermore, any of the steps of the methods described herein may be included as code instructions in a program, which may be executed by one or more processors.

Summarizing the above, the present disclosure provides embodiments for entangling two or more trapped ions. For this, a common motional mode of the two or more trapped ions is used by conditionally, depending on an internal state of said two or more trapped ions, exciting and/or de-exciting said common motional mode. The common motional mode is conditionally excited/de-excited by inducing, on each of the two or more trapped ions respective perpendicular state-dependent forces (SDFs) that are modulated in accordance with the frequency of the motional mode. More specifically, each of the perpendicular SDFs is induced by a laser beam and acts perpendicular to the propagation direction of the laser beam that induces it. The SDFs may be modulated by (i) modulating an intensity and/or an amplitude of the electromagnetic field of the first laser beam, (ii) changing a position and/or a direction of the first laser beam relative to the first trapped ion, and/or (iii) including light of different frequencies into the laser beam.

**Claims**

1. A method for entangling a first (381) and a second trapped ion (382) using a motional mode of the first (381) and the second trapped ion (382), comprising the steps of:

   inducing (S240), using a first laser beam (361), a first state-dependent force (371) on the first trapped ion (381);
   inducing (S240), using a second laser beam (362), a second state-dependent force (372) on the second trapped ion (382), wherein
   the inducing (S240) of the first (371) and the second state-dependent force (372) is performed simultaneously,
   the first state-dependent force (371) acts perpendicular to a propagation direction of the first laser beam (361),
   the second state-dependent force (372) acts perpendicular to a propagation direction of the second laser beam (362), and
   in the inducing of the first (371) and the second state-dependent force (372), the first (371) and the second state-dependent force (372) are respectively modulated (S220) by modulating the first and the second laser beam (362) in accordance with a frequency of the motional mode, whereby the motional mode is excited depending on an internal state of the first (381) and the second trapped ion (382), wherein,
   in the modulating (S220) of the first state-dependent force (371), the first state-dependent force (371) is modulated, at the position of the first trapped ion (381), by

      - modulating an intensity and/or an amplitude of the electromagnetic field of the first laser beam (361),
      - changing a position and/or a direction of the first laser beam (361) relative to the first trapped ion (381), and/or
      - including light of different frequencies into the laser beam; and/or

   in the modulating (S220) of the second state-dependent force (372), the second state-dependent force (372) is modulated, at the position of the second trapped ion (3z2), by

      - modulating an intensity and/or an amplitude of the electromagnetic field of the second laser beam (362),
      - changing a position and/or a direction of the second laser beam (362) relative to the second trapped ion (382), and/or
      - including light of different frequencies into the laser beam, wherein,

   in the inducing of the first state-dependent force (371), an electromagnetic field of the first laser beam (361) has, at the position of the first trapped ion (381), a gradient component that is perpendicular to the propagation direction of the first laser beam (361), wherein
   the gradient component of the first laser beam (361) is a component of an intensity gradient, a component of a phase gradient, and/or a component of a polarization gradient;
   **characterized in that**
   the first laser beam (361) includes a first beam component (811) with a first beam shape and a second beam component (812) with a second beam shape, wherein
   the first beam shape:

      - is different from the second beam shape, and
      - has zero electric field at the position of the first trapped ion (381); and

   the gradient component of the first laser beam at the position of the first trapped ion (381) increases with an intensity of the first beam component (811).

2. The method according to claim 1, wherein,
   in the inducing of the second state-dependent force (372), an electromagnetic field of the second laser beam (362) has, at the position of the second trapped ion (382), a gradient component that is perpendicular to the propagation direction of the second laser beam (362), wherein the gradient component of the second laser beam (362) is a component of an intensity gradient, a component of a phase gradient, and/or a component of a polarization gradient.

3. The method according to claim 1 or 2, wherein,

in the inducing of the first state-dependent force (371), the first state-dependent force (371) is modulated for a gate time; and

in the inducing of the second state-dependent force (372), the second state-dependent force (372) is modulated for the gate time; wherein

the gate time is a predetermined time for which, after the modulation over the gate time:

- internal states of the first (381) and the second trapped ion (382) are not entangled with a state of the motional mode, and/or
- a total displacement in a position-momentum space of a harmonic oscillator of the motional mode is zero, the total displacement being a total displacement due to the modulation of the first (371) and the second state-dependent force (372) over the gate time.

4. The method according to claim 3, wherein,

the gate time is given as $T = 2\pi n/\delta$, wherein n is an integer greater than zero and $\delta$ is a predetermined frequency;

in the inducing of the first state-dependent force (371), the first state-dependent force (371) is modulated for the gate time with a modulation frequency $\omega_{Mod} = \omega_M + \delta$;

in the inducing of the second state-dependent force (372), the second state-dependent force (372) is modulated for the gate time with a modulation frequency $\omega_{Mod} = \omega_M + \delta$; and

$\omega_M$ is a frequency of the motional mode.

5. The method according to claim 4, wherein
the frequency $\delta$ is predetermined by:

- determining the integer n based on a quantum gate to be implemented, and
- minimizing a cost function that depends on the gate time T and a gate fidelity, the gate fidelity being a fidelity of the entangling of the first (381) and the second trapped ion (382).

6. The method according to any of claims 1 to 5, wherein
the first and/or the second laser beam (362) have a Gaussian beam shape, a Super-Gaussian, a Laguerre-Gaussian, or a Hermite-Gaussian beam shape.

7. The method according to any of claims 1 to 5, wherein

the first laser beam (361) has two or more beam components that have different beam shapes and/or have beam shapes that are displaced with respect to each other, and/or

the second laser beam (362) has two or more beam components that have different beam shapes and/or have beam shapes that are displaced with respect to each other.

8. The method according to claim 7, wherein
a first beam component of the two or more beam components of the first laser beam (361) has a Gaussian beam shape and a second beam component of the two or more beam components of the first laser beam (361) has a Hermite-Gaussian beam shape; and/or a second beam component of the two or more beam components of the second laser beam (362) has a Gaussian beam shape and a second beam component of the two or more beam components of the second laser beam (362) has a Hermite-Gaussian beam shape.

9. The method according to any of claims 1 to 8, wherein
the method further includes, simultaneously to the inducing of the first (371) and the second state-dependent force (372), the steps of:

inducing, using a third laser beam, a third state-dependent force on a third trapped ion; and
inducing, using a fourth laser beam, a fourth state-dependent force on a fourth trapped ion; wherein
the third state-dependent force acts perpendicular to a propagation direction of the third laser beam,
the fourth state-dependent force acts perpendicular to a propagation direction of the fourth laser beam, and
in the inducing of the third and the fourth state-dependent force, the third and the fourth state-dependent force are respectively modulated by modulating the third and the fourth laser beam in accordance with a frequency of a second motional mode of the first trapped ion (381), the second trapped ion (382), the third trapped ion and the fourth trapped ion, whereby the second motional mode is excited depending on an internal state of the third and the fourth trapped ion.

10. The method according to any of claims 1 to 9, wherein
the first (381) and the second trapped ion (382) are ions of a plurality of ions trapped in a line or on positions of a two-dimensional lattice.

11. The method according to any of claims 1 to 10, wherein,
the first (361) and the second laser beam (362) are directed to the first (381) and the second trapped ion (382) using a same objective by adjusting an angle of incidence of the beams with respect to the principal plane of the objective.

12. The method according to any of claims 1 to 11, wherein

the first state-dependent force (371) depends on an internal state of the first trapped ion (381), and/or
the second state-dependent force (372) depends on an internal state of the second trapped ion (382).

13. The method according to any of claims 1 to 12, wherein

two internal states of the first trapped ion (381) are used to model a first qubit,
two internal states of the second trapped ion (382) are used to model a second qubit,
the first state-dependent force (371) differs for the two internal states of the first trapped ion (381), and
the second state-dependent force (372) differs for the two internal states of the second trapped ion (382); and/or
the method implements a quantum gate on the first and the second qubits, in particular a light-shift, LS, gate and/or a $\sigma_z\sigma_z$ gate.

14. An apparatus for controlling a first (361) and a second laser beam (362) to entangle a first (381) and a second trapped ion (382), using a motional mode of the first (381) and the second trapped ion (382), the apparatus comprising:

circuitry (315) configured to control simultaneously:

- a first laser beam (361) to induce a first state-dependent force (371) on the first trapped ion (381), and
- a second laser beam (362) to induce a second state-dependent force (372) on the second trapped ion (382), wherein

the first state-dependent force (371) acts perpendicular to a propagation direction of the first laser beam (361),
the second state-dependent force (372) acts perpendicular to a propagation direction of the second laser beam (362), and
in the inducing of the first (371) and the second state-dependent force (372), the first (371) and the second state-dependent force (372) are respectively modulated by modulating the first and the second laser beam (362) in accordance with a frequency of the motional mode, whereby the motional mode is excited depending on an internal state of the first (381) and the second trapped ion (382), wherein,
the circuitry (315) is configured to modulate:

- in the modulating of the first state-dependent force (371), the first state-dependent force (371), at the position of the first trapped ion (381), by modulating an intensity and/or an amplitude of the electromagnetic field of the first laser beam (361), by changing a position and/or a direction of the first laser beam (361) relative to the first trapped ion (381), and/or by including light of different frequencies into the laser beam; and/or
- in the modulating of the second state-dependent force (372), the second state-dependent force (372) at the position of the second trapped ion (382), by modulating an intensity and/or an amplitude of the electromagnetic field of the second laser beam (362), by changing a position and/or a direction of the second laser beam (362) relative to the second trapped ion (382), and/or by including light of different frequencies into the laser beam, wherein

in the inducing of the first state-dependent force (371), an electromagnetic field of the first laser beam (361) has, at the position of the first trapped ion (381), a gradient component that is perpendicular to the propagation direction of the first laser beam (361), wherein
the gradient component of the first laser beam (361) is a component of an intensity gradient, a component of a phase gradient, and/or a component of a polarization gradient;

**characterized in that**
the first laser beam (361) includes a first beam component (811) with a first beam shape and a second beam component (812) with a second beam shape, wherein
the first beam shape:

- is different from the second beam shape, and
- has zero electric field at the position of the first trapped ion (381); and

the gradient component of the first laser beam at the position of the first trapped ion (381) increases with an intensity of the first beam component (811).

**Patentansprüche**

1. Verfahren zum Verschränken eines ersten (381) und eines zweiten gefangenen Ions (382) unter Verwendung eines Bewegungsmodus des ersten (381) und des zweiten gefangenen Ions (382), das die folgenden Schritte umfasst:

Induzieren (S240), unter Verwendung eines ersten Laserstrahls (361), einer ersten zustandsabhängigen Kraft (371) auf das erste gefangene ion (381);
Induzieren (S240), unter Verwendung eines zweiten Laserstrahls (362), einer zweiten zustandsabhängigen Kraft (372) auf das zweite gefangene ion (382), wobei
das Induzieren (S240) der ersten (371) und der zweiten zustandsabhängigen Kraft (372) gleichzeitig erfolgt,
die erste zustandsabhängige Kraft (371) senkrecht zu einer Ausbreitungsrichtung des ersten Laserstrahls (361) wirkt,
die zweite zustandsabhängige Kraft (372) senkrecht zu einer Ausbreitungsrichtung des zweiten Laserstrahls (362) wirkt, und
beim Induzieren der ersten (371) und der zweiten zustandsabhängigen Kraft (372) die erste (371) und die zweite zustandsabhängige Kraft (372) jeweils durch Modulieren des ersten und des zweiten Laserstrahls (362) entsprechend einer Frequenz des Bewegungsmodus moduliert werden (S220), wodurch der Bewegungsmodus in Abhängigkeit von einem inneren Zustand des ersten (381) und des zweiten gefangenen Ions (382) angeregt wird, wobei,
beim Modulieren (S220) der ersten zustandsabhängigen Kraft (371) die erste zustandsabhängige Kraft (371) an der Position des ersten gefangenen Ions (381) moduliert wird durch

- Modulieren einer Intensität und/oder einer Amplitude des elektromagnetischen Feldes des ersten Laserstrahls (361),
- Ändern einer Position und/oder einer Richtung des ersten Laserstrahls (361) relativ zu dem ersten gefangenen Ion (381), und/oder
- Einbeziehen von Licht verschiedener Frequenzen in den Laserstrahl; und/oder

beim Modulieren (S220) der zweiten zustandsabhängigen Kraft (372) die zweite zustandsabhängige Kraft (372) an der Position des zweiten gefangenen Ions (382) moduliert wird durch

- Modulieren einer Intensität und/oder einer Amplitude des elektromagnetischen Feldes des zweiten Laserstrahls (362),
- Ändern einer Position und/oder einer Richtung des zweiten Laserstrahls (362) relativ zu dem zweiten gefangenen Ion (382), und/oder
- Einbeziehen von Licht verschiedener Frequenzen in den Laserstrahl, wobei

beim Induzieren der ersten zustandsabhängigen Kraft (371) ein elektromagnetisches Feld des ersten Laserstrahls (361) an der Position des ersten gefangenen Ions (381) eine Gradientenkomponente aufweist, die senkrecht zur Ausbreitungsrichtung des ersten Laserstrahls (361) steht, wobei
die Gradientenkomponente des ersten Laserstrahls (361) eine Komponente eines Intensitätsgradienten, eine Komponente eines Phasengradienten und/oder eine Komponente eines Polarisationsgradienten ist;
**dadurch gekennzeichnet, dass**
der erste Laserstrahl (361) eine erste Strahlkomponente (811) mit einer ersten Strahlform und eine zweite Strahlkomponente (812) mit einer zweiten Strahlform enthält, wobei
die erste Strahlform:

- sich von der zweiten Strahlform unterscheidet und
- an der Position des ersten gefangenen Ions (381) ein elektrisches Feld von null aufweist; und

die Gradientenkomponente des ersten Laserstrahls an der Position des ersten gefangenen Ions (381) mit der Intensität der ersten Strahlkomponente (811) zunimmt.

2. Verfahren nach Anspruch 1, wobei
beim Induzieren der zweiten zustandsabhängigen Kraft (372) ein elektromagnetisches Feld des zweiten Laserstrahls (362) an der Position des zweiten gefangenen Ions (382) eine Gradientenkomponente aufweist, die senkrecht zur Ausbreitungsrichtung des zweiten Laserstrahls (362) ist, wobei die Gradientenkomponente des zweiten Laserstrahls (362) eine Komponente eines Intensitätsgradienten, eine Komponente eines Phasengradienten und/oder eine Komponente eines Polarisationsgradienten ist.

3. Verfahren nach Anspruch 1 oder 2, wobei

beim Induzieren der ersten zustandsabhängigen Kraft (371) die erste zustandsabhängige Kraft (371) für eine Gatterzeit moduliert wird; und
beim Induzieren der zweiten zustandsabhängigen Kraft (372) die zweite zustandsabhängige Kraft (372) für die Gatterzeit moduliert wird; wobei
die Gatterzeit eine vorgegebene Zeit ist, für die nach der Modulation über die Gatterzeit:

- innere Zustände des ersten (381) und des zweiten gefangenen Ions (382) nicht mit einem Zustand des Bewegungsmodus verschränkt sind, und/oder
- eine Gesamtverschiebung in einem Positions-Impulsraum eines harmonischen Oszillators des Bewegungsmodus null ist, wobei die Gesamtverschiebung eine Gesamtverschiebung aufgrund der Modulation der ersten (371) und der zweiten zustandsabhängigen Kraft (372) über die Gatterzeit ist.

4. Verfahren nach Anspruch 3, wobei

die Gatterzeit als $T = 2\pi n/\delta$ gegeben ist, wobei n eine ganze Zahl größer als Null ist und $\delta$ eine vorgegebene Frequenz ist;
beim Induzieren der ersten zustandsabhängigen Kraft (371), die erste zustandsabhängige Kraft (371) für die Gatterzeit mit einer Modulationsfrequenz $\omega_{Mod} = \omega_M + \delta$ moduliert wird;
beim Induzieren der zweiten zustandsabhängigen Kraft(372), die zweite zustandsabhängige Kraft (372) für die Gatterzeit mit einer Modulationsfrequenz $\omega_{Mod} = \omega_M + \delta$ moduliert wird; und
$\omega_M$ eine Frequenz des Bewegungsmodus ist.

5. Verfahren nach Anspruch 4, wobei
die Frequenz $\delta$ vorgegeben ist durch:

- Bestimmen der ganzen Zahl n auf der Grundlage eines zu implementierenden Quantengatters, und
- Minimieren einer Kostenfunktion, die von der Gatterzeit T und einer Gattertreue abhängt, wobei die Gattertreue eine Treue der Verschränkung des ersten (381) und des zweiten gefangenen Ions (382) ist.

6. Verfahren nach einem der Ansprüche 1 bis 5, wobei
der erste und/oder der zweite Laserstrahl (362) eine Gaußsche Strahlform, eine Supergaußsche, eine Laguerre-Gaußsche oder eine Hermite-Gaußsche Strahlform haben.

7. Verfahren nach einem der Ansprüche 1 bis 5, wobei

der erste Laserstrahl (361) zwei oder mehr Strahlkomponenten aufweist, die verschiedene Strahlformen und/oder gegeneinander verschobene Strahlformen haben, und/oder
der zweite Laserstrahl (362) zwei oder mehr Strahlkomponenten aufweist, die verschiedene Strahlformen und/oder gegeneinander verschobene Strahlformen haben.

8. Verfahren nach Anspruch 7, wobei

eine erste Strahlkomponente der zwei oder mehr Strahlkomponenten des ersten Laserstrahls (361) eine Gaußsche Strahlform und eine zweite Strahlkomponente der zwei oder mehr Strahlkomponenten des ersten Laserstrahls (361) eine Hermite-Gaußsche Strahlform aufweist; und/oder

eine zweite Strahlkomponente der zwei oder mehr Strahlkomponenten des zweiten Laserstrahls (362) eine Gaußsche Strahlform hat und eine zweite Strahlkomponente der zwei oder mehr Strahlkomponenten des zweiten Laserstrahls (362) eine Hermite-Gaußsche Strahlform hat.

9. Verfahren nach einem der Ansprüche 1 bis 8, wobei
das Verfahren ferner, gleichzeitig mit dem Induzieren der ersten (371) und der zweiten zustandsabhängigen Kraft (372), die folgenden Schritte umfasst:

Induzieren, unter Verwendung eines dritten Laserstrahls, einer dritten zustandsabhängigen Kraft auf ein drittes gefangenes Ion; und
Induzieren, unter Verwendung eines vierten Laserstrahls, einer vierten zustandsabhängigen Kraft auf ein viertes gefangenes Ion; wobei
die dritte zustandsabhängige Kraft senkrecht zu einer Ausbreitungsrichtung des dritten Laserstrahls wirkt,
die vierte zustandsabhängige Kraft senkrecht zu einer Ausbreitungsrichtung des vierten Laserstrahls wirkt, und
beim Induzieren der dritten und der vierten zustandsabhängigen Kraft die dritte und die vierte zustandsabhängige Kraft jeweils durch Modulieren des dritten und des vierten Laserstrahls entsprechend einer Frequenz eines zweiten Bewegungsmodus des ersten gefangenen Ions (381), des zweiten gefangenen Ions (382), des dritten gefangenen Ions und des vierten gefangenen Ions moduliert werden, wodurch der zweite Bewegungsmodus in Abhängigkeit von einem inneren Zustand des dritten und des vierten gefangenen Ions angeregt wird.

10. Verfahren nach einem der Ansprüche 1 bis 9, wobei
das erste (381) und das zweite gefangene Ion (382) Ionen einer Vielzahl von Ionen sind, die in einer Linie oder auf Positionen eines zweidimensionalen Gitters gefangen sind.

11. Verfahren nach einem der Ansprüche 1 bis 10, wobei
der erste (361) und der zweite Laserstrahl (362) auf das erste (381) und das zweite gefangene Ion (382) unter Verwendung desselben Objektivs gerichtet werden, indem ein Einfallswinkel der Strahlen in Bezug auf die Hauptebene des Objektivs eingestellt wird.

12. Verfahren nach einem der Ansprüche 1 bis 11, wobei

die erste zustandsabhängige Kraft (371) von einem inneren Zustand des ersten gefangenen Ions (381) abhängt, und/oder
die zweite zustandsabhängige Kraft (372) von einem inneren Zustand des zweiten gefangenen Ions (382) abhängt.

13. Verfahren nach einem der Ansprüche 1 bis 12, wobei

zwei innere Zustände des ersten gefangenen Ions (381) zur Modellierung eines ersten Qubits verwendet werden,
zwei innere Zustände des zweiten gefangenen Ions (382) zur Modellierung eines zweiten Qubits verwendet werden,
die erste zustandsabhängige Kraft (371) sich für die beiden inneren Zustände des ersten gefangenen Ions (381) unterscheidet, und
die zweite zustandsabhängige Kraft (372) sich für die beiden inneren Zustände des zweiten gefangenen Ions (382) unterscheidet; und/oder
das Verfahren ein Quantengatter auf dem ersten und dem zweiten Qubit implementiert, insbesondere ein Lichtverschiebungsgatter (LS) und/oder ein $\sigma_z\sigma_z$-Gatter.

14. Vorrichtung zum Steuern eines ersten (361) und eines zweiten Laserstrahls (362) zum Verschränken eines ersten (381) und eines zweiten gefangenen Ions (382) unter Verwendung eines Bewegungsmodus des ersten (381) und des zweiten gefangenen Ions (382), wobei die Vorrichtung umfasst:

eine Schaltung (315), die dazu konfiguriert ist, Folgendes gleichzeitig zu steuern:

- einen ersten Laserstrahl (361) zum Induzieren einer ersten zustandsabhängigen Kraft (371) auf das erste gefangene Ion (381), und

- einen zweiten Laserstrahl (362) zum Induzieren einer zweiten zustandsabhängigen Kraft (372) auf das zweite gefangene ion (382), wobei

die erste zustandsabhängige Kraft (371) senkrecht zu einer Ausbreitungsrichtung des ersten Laserstrahls (361) wirkt,

die zweite zustandsabhängige Kraft (372) senkrecht zu einer Ausbreitungsrichtung des zweiten Laserstrahls (362) wirkt, und

beim Induzieren der ersten (371) und der zweiten zustandsabhängigen Kraft (372) die erste (371) und die zweite zustandsabhängige Kraft (372) jeweils durch Modulieren des ersten und des zweiten Laserstrahls (362) entsprechend einer Frequenz des Bewegungsmodus moduliert werden, wodurch der Bewegungsmodus in Abhängigkeit von einem inneren Zustand des ersten (381) und des zweiten gefangenen Ions (382) angeregt wird, wobei,

die Schaltung (315) dazu konfiguriert ist, Folgendes zu modulieren:

- beim Modulieren der ersten zustandsabhängigen Kraft (371), die erste zustandsabhängig Kraft (371) an der Position des ersten gefangenen Ions (381) durch Modulieren einer Intensität und/oder einer Amplitude des elektromagnetischen Feldes des ersten Laserstrahls (361), durch Ändern einer Position und/oder einer Richtung des ersten Laserstrahls (361) relativ zu dem ersten gefangenen Ion (381) und/oder durch Einbeziehen von Licht verschiedener Frequenzen in den Laserstrahl; und/oder
- beim Modulieren der zweiten zustandsabhängigen Kraft (372), die zweite zustandsabhängige Kraft (372) an der Position des zweiten gefangenen Ions (382) durch Modulieren einer Intensität und/oder einer Amplitude des elektromagnetischen Feldes des zweiten Laserstrahls (362), durch Ändern einer Position und/oder einer Richtung des zweiten Laserstrahls (362) relativ zu dem zweiten gefangenen Ion (382) und/oder durch Einbeziehen von Licht verschiedener Frequenzen in den Laserstrahl, wobei

beim Induzieren der ersten zustandsabhängigen Kraft (371) ein elektromagnetisches Feld des ersten Laserstrahls (361) an der Position des ersten gefangenen Ions (381) eine Gradientenkomponente aufweist, die senkrecht zur Ausbreitungsrichtung des ersten Laserstrahls (361) steht, wobei

die Gradientenkomponente des ersten Laserstrahls (361) eine Komponente eines Intensitätsgradienten, eine Komponente eines Phasengradienten und/oder eine Komponente eines Polarisationsgradienten ist;

**dadurch gekennzeichnet, dass**

der erste Laserstrahl (361) eine erste Strahlkomponente (811) mit einer ersten Strahlform und eine zweite Strahlkomponente (812) mit einer zweiten Strahlform enthält, wobei

die erste Strahlform:

- sich von der zweiten Strahlform unterscheidet und
- an der Position des ersten gefangenen Ions (381) ein elektrisches Feld von null aufweist; und

die Gradientenkomponente des ersten Laserstrahls an der Position des ersten gefangenen Ions (381) mit der Intensität der ersten Strahlkomponente (811) zunimmt.

## Revendications

1. Procédé pour intriquer un premier ion piégé (381) et un deuxième ion piégé (382) en utilisant un mode de mouvement du premier ion piégé (381) et du deuxième ion piégé (382), comprenant les étapes suivantes :

induction (S240), à l'aide d'un premier faisceau laser (361), d'une première force dépendant de l'état (371) sur le premier ion piégé (381) ;

induction (S240), à l'aide d'un deuxième faisceau laser (362), d'une deuxième force dépendant de l'état (372) sur le deuxième ion piégé (382), dans lequel

les inductions (S240) de la première force dépendant de l'état (371) et de la deuxième force dépendant de l'état (372) sont mises en œuvre simultanément,

la première force dépendant de l'état (371) agit perpendiculairement à une direction de propagation du premier faisceau laser (361),

la deuxième force dépendant de l'état (372) agit perpendiculairement à une direction de propagation du deuxième faisceau laser (362), et

lors de l'induction de la première force dépendant de l'état (371) et de la deuxième force dépendant de l'état (372), la première force dépendant de l'état (371) et la deuxième force dépendant de l'état (372) sont modulées (S220) en modulant respectivement les premier et deuxième faisceaux lasers (362) conformément à une fréquence du mode de mouvement, moyennant quoi le mode de mouvement est excité en fonction d'un état interne du premier ion piégé (381) et du deuxième ion piégé (382), dans lequel,

lors de la modulation (S220) de la première force dépendant de l'état (371), la première force dépendant de l'état (371) est modulée, à la position du premier ion piégé (381), par

- la modulation d'une intensité et/ou d'une amplitude du champ électromagnétique du premier faisceau laser (361),
- le changement d'une position et/ou d'une direction du premier faisceau laser (361) par rapport au premier ion piégé (381), et/ou
- l'inclusion de lumière de différentes fréquences dans le faisceau laser ; et/ou

lors de la modulation (S220) de la deuxième force dépendant de l'état (372), la deuxième force dépendant de l'état (372) est modulée, à la position du deuxième ion piégé (382), par

- la modulation d'une intensité et/ou d'une amplitude du champ électromagnétique du deuxième faisceau laser (362),
- le changement d'une position et/ou d'une direction du deuxième faisceau laser (362) par rapport au deuxième ion piégé (382), et/ou
- l'inclusion de lumière de différentes fréquences dans le faisceau laser, dans lequel,

lors de l'induction de la première force dépendant de l'état (371), un champ électromagnétique du premier faisceau laser (361) comporte, à la position du premier ion piégé (381), une composante de gradient qui est perpendiculaire à la direction de propagation du premier faisceau laser (361), dans lequel la composante de gradient du premier faisceau laser (361) est une composante d'un gradient d'intensité, une composante d'un gradient de phase et/ou une composante d'un gradient de polarisation ;
**caractérisé en ce que**
le premier faisceau laser (361) comprend une première composante de faisceau (811) avec une première forme de faisceau et une deuxième composante de faisceau (812) avec une deuxième forme de faisceau, dans lequel la première forme de faisceau :

- est différente de la deuxième forme de faisceau, et
- a un champ électrique nul à la position du premier ion piégé (381) ; et

la composante de gradient du premier faisceau laser à la position du premier ion piégé (381) augmente avec l'intensité de la première composante de faisceau (811).

2. Procédé selon la revendication 1, dans lequel,
lors de l'induction de la deuxième force dépendant de l'état (372), un champ électromagnétique du deuxième faisceau laser (362) comporte, à la position du deuxième ion piégé (382), une composante de gradient qui est perpendiculaire à la direction de propagation du deuxième faisceau laser (362), dans lequel la composante de gradient du deuxième faisceau laser (362) est une composante d'un gradient d'intensité, une composante d'un gradient de phase et/ou une composante d'un gradient de polarisation.

3. Procédé selon la revendication 1 ou 2, dans lequel

lors de l'induction de la première force dépendant de l'état (371), la première force dépendant de l'état (371) est modulée pendant un temps de porte ; et
lors de l'induction de la deuxième force dépendant de l'état (372), la deuxième force dépendant de l'état (372) est modulée pendant le temps de porte ; dans lequel
le temps de porte est un temps prédéterminé pendant lequel, après la modulation durant le temps de porte :

- les états internes du premier ion piégé (381) et du deuxième ion piégé (382) ne sont pas intriqués avec un état du mode de mouvement, et/ou
- un déplacement total dans un espace position-impulsion d'un oscillateur harmonique du mode de mouvement est nul, le déplacement total étant un déplacement total dû à la modulation de la première force dépendant de l'état (371) et de la deuxième force dépendant de l'état (372) durant le temps de porte.

**4.** Procédé selon la revendication 3, dans lequel

le temps de porte est donné par $T = 2\pi n/\delta$, dans lequel n est un nombre entier supérieur à zéro et $\delta$ est une fréquence prédéterminée ;
lors de l'induction de la première force dépendant de l'état (371), la première force dépendant de l'état (371) est modulée pendant le temps de porte avec une fréquence de modulation $\omega_{Mod} = \omega_M + \delta$ ;
lors de l'induction de la deuxième force dépendant de l'état (372), la deuxième force dépendant de l'état (372) est modulée pendant le temps de porte avec une fréquence de modulation $\omega_{Mod} = \omega_M + \delta$ ; et
$\omega_M$ est une fréquence du mode de mouvement.

**5.** Procédé selon la revendication 4, dans lequel
la fréquence $\delta$ est prédéterminée par :

- la détermination du nombre entier n en fonction d'une porte quantique à implémenter, et
- la minimisation d'une fonction de coût qui dépend du temps de porte $T$ et d'une fidélité de porte, la fidélité de porte étant une fidélité de l'intrication du premier ion piégé (381) et du deuxième ion piégé (382).

**6.** Procédé selon l'une quelconque des revendications 1 à 5, dans lequel
le premier faisceau laser et/ou le deuxième faisceau laser (362) présentent une forme de faisceau gaussienne, une forme de faisceau super-gaussienne, une forme de faisceau de Gauss-Laguerre ou une forme de faisceau de Gauss-Hermite.

**7.** Procédé selon l'une quelconque des revendications 1 à 5, dans lequel

le premier faisceau laser (361) présente deux ou plusieurs composantes de faisceau présentant des formes de faisceau différentes et/ou des formes de faisceau qui sont décalées les unes par rapport aux autres, et/ou
le deuxième faisceau laser (362) comporte deux ou plusieurs composantes de faisceau présentant des formes de faisceau différentes et/ou des formes de faisceau qui sont décalées les unes par rapport aux autres.

**8.** Procédé selon la revendication 7, dans lequel

une première composante de faisceau desdites deux ou plusieurs composantes de faisceau du premier faisceau laser (361) présente une forme de faisceau gaussienne et une deuxième composante de faisceau desdites deux ou plusieurs composantes de faisceau du premier faisceau laser (361) présente une forme de faisceau de Gauss-Hermite ; et/ou
une deuxième composante de faisceau desdites deux ou plusieurs composantes de faisceau du deuxième faisceau laser (362) présente une forme de faisceau gaussienne et une deuxième composante de faisceau desdites deux ou plusieurs composantes de faisceau du deuxième faisceau laser (362) présente une forme de faisceau de Gauss-Hermite.

**9.** Procédé selon l'une quelconque des revendications 1 à 8, dans lequel
le procédé comprend en outre, simultanément à l'induction de la première force dépendant de l'état (371) et de la deuxième force dépendant de l'état (372), les étapes suivantes :

induction, à l'aide d'un troisième faisceau laser, d'une troisième force dépendant de l'état sur un troisième ion piégé ; et
induction, à l'aide d'un quatrième faisceau laser, d'une quatrième force dépendant de l'état sur un quatrième ion piégé ; dans lequel
la troisième force dépendant de l'état agit perpendiculairement à une direction de propagation du troisième faisceau laser,
la quatrième force dépendant de l'état agit perpendiculairement à une direction de propagation du quatrième faisceau laser, et
lors de l'induction des troisième et quatrième forces dépendant de l'état, les troisième et quatrième forces dépendant de l'état sont modulées en modulant respectivement les troisième et quatrième faisceaux laser conformément à une fréquence d'un deuxième mode de mouvement du premier ion piégé (381), du deuxième ion piégé (382), du troisième ion piégé et du quatrième ion piégé, moyennant quoi le deuxième mode de mouvement est excité en fonction d'un état interne des troisième et quatrième ions piégés.

**10.** Procédé selon l'une quelconque des revendications 1 à 9, dans lequel
le premier ion piégé (381) et le deuxième ion piégé (382) sont des ions d'une pluralité d'ions piégés dans une ligne ou à des positions d'un maillage bidimensionnel.

**11.** Procédé selon l'une quelconque des revendications 1 à 10, dans lequel
le premier faisceau laser (361) et le deuxième faisceau laser (362) sont dirigés vers le premier ion piégé (381) et le deuxième ion piégé (382) en utilisant un même objectif par ajustement d'un angle d'incidence des faisceaux par rapport au plan principal de l'objectif.

**12.** Procédé selon l'une quelconque des revendications 1 à 11, dans lequel

la première force dépendant de l'état (371) dépend d'un état interne du premier ion piégé (381), et/ou
la deuxième force dépendant de l'état (372) dépend d'un état interne du deuxième ion piégé (382).

**13.** Procédé selon l'une quelconque des revendications 1 à 12, dans lequel

deux états internes du premier ion piégé (381) sont utilisés pour modéliser un premier qubit,
deux états internes du deuxième ion piégé (382) sont utilisés pour modéliser un deuxième qubit,
la première force dépendant de l'état (371) diffère pour les deux états internes du premier ion piégé (381), et
la deuxième force dépendant de l'état (372) diffère pour les deux états internes du deuxième ion piégé (382) ; et/ou
le procédé implémente une porte quantique sur les premier et deuxième qubits, en particulier une porte de décalage lumineux, LS - Light-Shift, et/ou une porte $\sigma_Z\sigma_Z$.

**14.** Appareil permettant de commander un premier faisceau laser (361) et un deuxième faisceau laser (362) pour intriquer un premier ion piégé (381) et un deuxième ion piégé (382), en utilisant un mode de mouvement du premier ion piégé (381) et du deuxième ion piégé (382), l'appareil comprenant :

une circuiterie (315) configurée pour commander simultanément :

- un premier faisceau laser (361) pour induire une première force dépendant de l'état (371) sur le premier ion piégé (381), et
- un deuxième faisceau laser (362) pour induire une deuxième force dépendant de l'état (372) sur le deuxième ion piégé (382), dans lequel

la première force dépendant de l'état (371) agit perpendiculairement à une direction de propagation du premier faisceau laser (361),
la deuxième force dépendant de l'état (372) agit perpendiculairement à une direction de propagation du deuxième faisceau laser (362), et
lors de l'induction de la première force dépendant de l'état (371) et de la deuxième force dépendant de l'état (372), la première force dépendant de l'état (371) et la deuxième force dépendant de l'état (372) sont modulées en modulant respectivement le premier faisceau laser et le deuxième faisceau laser (362) conformément à une fréquence du mode de mouvement, moyennant quoi le mode de mouvement est excité en fonction d'un état interne du premier ion piégé (381) et du deuxième ion piégé (382), dans lequel
la circuiterie (315) est configurée pour moduler :

- lors de la modulation de la première force dépendant de l'état (371), la première force dépendant de l'état (371), à la position du premier ion piégé (381), en modulant une intensité et/ou une amplitude du champ électromagnétique du premier faisceau laser (361), en changeant une position et/ou une direction du premier faisceau laser (361) par rapport au premier ion piégé (381), et/ou en incluant de la lumière de différentes fréquences dans le faisceau laser ; et/ou
- lors de la modulation de la deuxième force dépendant de l'état (372), la deuxième force dépendant de l'état (372) à la position du deuxième ion piégé (382), en modulant une intensité et/ou une amplitude du champ électromagnétique du deuxième faisceau laser (362), en changeant une position et/ou une direction du deuxième faisceau laser (362) par rapport au deuxième ion piégé (382), et/ou en incluant de la lumière de différentes fréquences dans le faisceau laser, dans lequel

lors de l'induction de la première force dépendant de l'état (371), un champ électromagnétique du premier faisceau laser (361) comporte, à la position du premier ion piégé (381), une composante de gradient qui est perpendiculaire à la direction de propagation du premier faisceau laser (361), dans lequel la composante de gradient du premier faisceau laser (361) est une composante d'un gradient d'intensité, une composante d'un gradient de phase et/ou une composante d'un gradient de polarisation ;

**caractérisé en ce que**

le premier faisceau laser (361) comprend une première composante de faisceau (811) avec une première forme de faisceau et une deuxième composante de faisceau (812) avec une deuxième forme de faisceau, dans lequel la première forme de faisceau :

- est différente de la deuxième forme de faisceau, et
- a un champ électrique nul à la position du premier ion piégé (381) ; et

la composante de gradient du premier faisceau laser à la position du premier ion piégé (381) augmente avec l'intensité de la première composante de faisceau (811).

**Fig. 1**

S200: generate first and
second laser beam

↓

S220: modulate the first
and the second laser beam
in accordance with a
frequency of a motional
mode

↓

S240: induce first and
second transverse SDF on
the first and second
trapped ion, respectively

**Fig. 2**

Controller 310

Circuitry
315

390

Laser Beam unit 320

372

362

382

Laser(s) 330

Optical
Elements 350

383

381

340

361

371

**Fig. 3**

**Fig. 4**

310

401

Memory 410 ◄─────► Interface 430

Circuitry 315 ◄─────► Transceiver 440

**Fig. 5**

320

340

Addressing unit 520

Principal Plane 560

Focal Plane 570

362

362

382

381

362

361

361

$\theta_1$  $\theta_2$

Modulation unit 510

Objective 550

Optical Axis 580

690

680

660

670

Intensity

Ion

**Fig. 7**

radial distance r
from beam axis

650

640

630

620

340

Laser(s) 330

320

**Fig. 6**

801  802

803

**Fig. 8a)**

811

812

**Fig. 8b)**

813

814

**Fig. 8c)**

**Fig. 9 a)**

**Fig. 9 b)**

Fig. 10

Fig. 11

**12a)** $|00\rangle \rightarrow |00\rangle$ — Forces cancel, COM mode not excited

**12b)** $|01\rangle \rightarrow e^{i\phi}|01\rangle$ — Forces excite COM mode

**12c)** $|10\rangle \rightarrow e^{i\phi}|10\rangle$ — Forces excite COM mode

**12d)** $|11\rangle \rightarrow |11\rangle$ — Forces cancel, COM mode not excited

**Fig. 12e)**

laser beam in z-direction

Fig. 13a) xy-cut z=0

Fig. 13b) yz-cut x=0

laser beam

Fig. 13c) xz-cut y=-a

laser beam in z-direction

**Fig. 13d)**

Fig. 14a) xy-cut z=0

Fig. 14b) yz-cut x=0

laser beam

Fig. 14c) xz-cut y=-a

laser beam in z-direction

**Fig. 14d)**

**Fig. 15a)** 1501 / 381 / 382 / 1502 / 1511 / 1512 — xy-cut z=0

**Fig. 15b)** yz-cut x=0

laser beam

**Fig. 15c)** xz-cut z=-a

**Fig. 16a)** 1601 / 381 / 1602 / 382 / 1611 / 1612 — xy-cut z=0

**Fig. 16b)** yz-cut x=0

laser beam

**Fig. 16c)** xz-cut z=-a

**Fig. 17a)**

laser beam

oscillation according to one
exemplary motional mode

xy-cut
z=0

x

y

**Fig. 17b)**

yz-cut
x=0

z

y

**Fig. 17c)**

xz-cut
y=-a

x

z

**Fig. 17d)**

laser beam
in z-direction

x

z

a

y

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **D. LEIBFRIED et al.** Experimental demonstration of a robust, high-fidelity geometric two ion-qubit phase gate. *Nature,* 2003, vol. 422, 412-415
- **P.J. LEE et al.** Phase control of trapped ion quantum gates. *J. Opt. B: Quantum Semiclass. Opt.,* 2005, vol. 7, S371-S383
- **L. AOLITA et al.** High-fidelity ion-trap quantum computing with hyperfine clock states. *Phys. Rev.,* 19 October 2007, vol. 76, 040303

- **B. SAWYER et al.** A Wavelength-Insensitive, Multispecies Entangling Gate for Group-2 Atomic Ions. *Phys. Rev.*
- Tunable transverse spin-motion coupling for quantum information processing. **ADAM D WEST et al.** arxiv.org. Cornell University library, 20 July 2020